(19) Europäisches Patentamt
European Patent Office
Office européen des brevets

(11) **EP 4 277 945 B1**

(12) **EUROPEAN PATENT SPECIFICATION**

(45) Date of publication and mention
of the grant of the patent:
**14.08.2024   Bulletin 2024/33**

(21) Application number: **23718358.7**

(22) Date of filing: **03.04.2023**

(51) International Patent Classification (IPC):
***C08J 11/08*** *(2006.01)*   ***C08J 11/16*** *(2006.01)*

(52) Cooperative Patent Classification (CPC):
**C08J 11/08; C08J 11/16;** B01J 27/08;
C08J 2301/02; C08J 2323/02; C08J 2333/20;
C08J 2367/02; C08J 2367/04; C08J 2375/04;
C08J 2377/00; C08J 2401/02; C08J 2423/02;
C08J 2433/20; C08J 2467/02; C08J 2467/04;

(Cont.)

(86) International application number:
**PCT/IL2023/050349**

(87) International publication number:
**WO 2023/194994 (12.10.2023 Gazette 2023/41)**

(54) **METHOD FOR RECLAIMING FIBERS FROM TEXTILES WASTE**

METHODE ZUR RÜCKGEWINNUNG VON FASERN AUS TEXTILABFÄLLEN

MÉTHODE DE RÉCUPÉRATION DES FIBRES DES DÉCHETS TEXTILES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **04.04.2022   US 202263326923 P**

(43) Date of publication of application:
**22.11.2023   Bulletin 2023/47**

(73) Proprietor: **Bromine Compounds Ltd.**
**8410101 Beer-Sheva (IL)**

(72) Inventors:
• **RAPAPORT, Ella**
**7933500 Moshav Shahar (IL)**
• **BEN DAVID, Iris**
**7751626 Ashdod (IL)**
• **BEN DANIEL, Revital**
**7174080 Modiin Maccabim Reut (IL)**
• **MIASKOVSKI, Gershon**
**8426511 Beer Sheva (IL)**
• **EDEN, Eyal**
**6082633 Shoham (IL)**
• **HAKIMI, Elad**
**8470581 Beer Sheva (IL)**
• **CHERNOMORDIK, Yuri**
**8533800 Lehavim (IL)**
• **SHALEV, Itzhak**
**7688000 Beit Gamliel (IL)**
• **EPSHTEIN ASSOR, Yelena**
**8468567 Beer Sheva (IL)**
• **AMAR, Orel**
**8753831 Ofakim (IL)**
• **RACHMILEVICH, Yaakov**
**8469642 Beer Sheva (IL)**

(74) Representative: **Ter Meer Steinmeister & Partner Patentanwälte mbB**
**Nymphenburger Straße 4**
**80335 München (DE)**

(56) References cited:
WO-A1-2022/146219      CN-A- 101 402 658
CN-A- 104 894 298       CN-A- 106 146 877
CN-A- 113 550 019       CN-A- 115 613 157
JP-B2- 5 824 766        US-B2- 11 168 196

- **LIANG LING ET AL: "Conversion of cellulose rich municipal solid waste blends using ionic liquids: feedstock convertibility and process scale-up", RSC ADVANCES, vol. 7, no. 58, 1 January 2017 (2017-01-01), pages 36585 - 36593, XP093050415, DOI: 10.1039/C7RA06701A**
- **FU XIAOTONG ET AL: "Preparation of thermally stable and surface-functionalized cellulose nanocrystals by a fully recyclable organic acid and ionic liquid mediated technique under mild conditions", CELLULOSE, SPRINGER NETHERLANDS, NETHERLANDS, vol. 27, no. 3, 20 November 2019 (2019-11-20), pages 1289 - 1299, XP037007121, ISSN: 0969-0239, [retrieved on 20191120], DOI: 10.1007/S10570-019-02875-2**

(52) Cooperative Patent Classification (CPC): (Cont.)
C08J 2475/04; C08J 2477/00

**Description**

Globally, an estimated 92 million tons of textiles waste is created each year. By 2030, more than 134 million tons of textiles a year will be discarded. Worldwide, just 12% of the material used for clothing ends up being recycled. Compared to paper, glass and plastic PET bottles - which have recycling rates of 66%, 27% and 29% respectively in the US, textiles lag behind. Most recycled textiles end up as low value products such as rags and fillers making the economics of recycling untenable.

The most common fibers used in textiles are polyester and cotton. Smaller amounts are polyamide and polyolefin fibers. Each textile article is made up of thousands of tightly interlaced individual fibers. Methods used to separate the fibers invariably damage and shorten the fibers making their direct reuse in textiles difficult.

Textiles made of polyester-cotton blends are now among the most popular fabrics for use in clothing and many other textiles. The blend is usually at the fiber level. This makes them hard to separate so that they can be effectively recycled. Sorting textiles into different fibers and material types by hand is labor intensive, slow and requires a skilled workforce and does not solve the fiber blend problem. Fiber recycling technologies do exist, but they are only used on a small scale. Generally, the techniques can be separated into mechanical and chemical recycling.

Mechanical recycling, where fabrics are shredded and pulled to break them down into fibers, produces fabrics of lower quality and strength due to the shortening of the constituent fibers. The results from this kind of recycling cannot be used for producing clothing. Instead, these tend to then be "downcycled" to produce low value fiber materials such as thermal insulation and wadding.

There has been success on a smaller scale to effectively separate natural and synthetic blends, such as cotton/polyester blend, using chemical pathways. There are various enzymatic, solvent and hydrolytic methods to dissolve cellulose, polyester or both. However, scaling up these technologies to an industrial scale has proved to be technically and economically challenging. Moreover, none of these approaches leave both the cellulosic and the polyester components unaffected, nor do they provide any concepts for direct upcycling. Therefore, there exists a need for new recovery methods of blended waste textile products.

Molten Salt Hydrate (MSH) of lithium bromide (LiBr), was found to be able to dissolve bleached hardwood kraft pulp, without significant depolymerization of cellulose (Xueqin Zhang, Naiyu Xiao, Huihui Wang, Chuanfu Liu, and Xuejun Pan. Polymers, 2018, 10, 614). Cellulose was first swelled, then hydrolyzed, then dissolved in a homogenous medium of concentrated (above 50% by weight) aqueous solution. It has been postulated that the process works by breaking hydrogen bonds, increasing the hydrophilicity of cellulose and benefits from a synergetic effect of the bromine.

In US patent 9,187,790B2 molten salt hydrates (MSHs), such as MSH of LiBr and MSH of $CaBr_2$, were used in fractionation, conversion, and saccharification of lignocellulosic biomass (plant matter such as wood pulp, corn stover and waste paper). The purpose was to obtain sugars from wood as feedstock for further fermentation processes for fuels and chemicals. Multipart separation of hemicellulose and lignin was required to obtain the desired sugars.

International patent application publication WO 2020/212616 describes a method for the preparation of micro- or nanocrystalline cellulose from virgin cellulose like cotton linter using a hydrate of zinc chloride as the molten salt ($ZnCl_2$ MSH). The method requires the use of an MSH free of proton acid, in particular, the use of a $ZnCl_2$ MSH in combination with a proton scavenger such as ZnO or $Zn(OH)_2$ (see WO2020212616, Examples 1-4) .

In CN102093484 nanocrystalline cellulose is prepared from cellulosic material such as cotton, chemical pulp or microcrystalline cellulose. The method combines preparing a suspension of the cellulosic material in a molten salt hydrate of zinc chloride and homogenizing the solution at a high speed, such as 8,000 or 12,000 rev/mins, for one to several hours. Diluted acid such as hydrochloric acid, sulfuric acid or phosphoric acid is added to ensure that the cellulose is separated out and to prevent precipitation of $Zn(OH)_2$.

In contrast to the lignocellulose biomass, cotton found in textiles is mostly pure cellulose. A series of preparation steps (enzymatic de-sizing, alkaline scouring, oxidative bleaching, etc.) is routinely practiced in the textile finishing industry to remove native cotton "impurities" including fats, waxes, proteins, hemicellulose, etc.

US 11,168,196 B2 relates to a method of separating cellulose and polyester from a material comprising a blend of cellulose and polyester, wherein the method comprises steps of mixing the material comprising a blend of cellulose and polyester with a first portion of superbase-based ionic liquid to dissolve a first portion of cellulose and form a first cellulose solution and a first residue comprising polyester, removing the first residue comprising polyester from the first cellulose solution, and directing the first cellulose solution to one or more further processing step.

JP 5 824 766 B2 relates to a method for separating specific fibers from a blend of fibers containing at least two kinds of fibers, wherein the method includes the charging of the blended fibers to an ionic liquid that dissolves the specific fibers and extracting the ionic liquid.

CN 106 146 877 relates to a method for recovering waste textile by the aid of an ionic liquid, wherein the method comprises the following steps: 1) pretreatment of the waste textile, whereby the waste textile is crushed such that a pretreated waste textile is obtained, and 2) water swelling and dissolving in the ionic liquid, wherein the pretreated waste textile, ionic liquid and water are mixed and stirred in vacuum to obtain a liquid containing cellulose.

CN 113 550 019 relates to a preparation method of colored regenerated cellulose conductive filaments based on waste textiles. The preparation method inter alia comprises the following steps: the waste textiles are classified and opened into waste fibers; the waste fibers are treated with dilute inorganic acid and dissolved in ionic liquid to obtain a regenerated cellulose solution; indium tin oxide is dispersed in dimethyl sulfoxide to obtain indium tin oxide dispersion liquid; the regenerated cellulose solution is mixed with the indium tin oxide dispersion liquid, and then ultrasonic treatment and stirring are carried out to obtain a regenerated cellulose spinning solution.

We have now found a method for MSH treatment of post-consumer textiles that results in fibrillated and depolymerized cellulose-containing medium (also referred to as "dope"), from which defibrillated and depolymerized cellulose is easily recoverable. In the case of cotton/polymer blends, such as cotton/polyester (PET) blends, the cotton component moves into the liquid phase, such that the synthetic component, which remains intact, can be separated as unaffected fibers which may be reused as-is or may be melted and re-extruded into new fibers or other products, e.g. bottles. The dope may be used to produce cellulose products such as microcrystalline cellulose (MCC), cellulose variants such as hydroxyethyl cellulose (HEC), cast cellulosic films, fibers or structural elements. The present invention, therefore, provides a new cost-efficient, environmentally-friendly method for recycling cotton and various blended cotton/polymer waste textile products. Notably, the method of the invention allows separation of the undamaged polyester fibers thereby facilitating their direct reuse in textiles and other applications.

MCC is pure fibrous partially depolymerized cellulose, traditionally commercially synthesized from wood pulp. MCC can be obtained by different processes such as high pressure homogenization, enzyme mediated, steam explosion and acid hydrolysis. The latter process can be done using mineral acids such as $H_2SO_4$, HCl and HBr as well as ionic liquids. The role of these reagents is to hydrolyze the amorphous regions between the crystalline domains and release the microcrystalline fibrils. Major applications of MCC are in pharma, food, cosmetics and others, as binders, anticaking agents, thickeners, emulsifiers, fillers and more.

The present invention is therefore primarily directed to a method of recovery of cellulose, especially in the form of MCC, from cellulose-containing textiles, preferably waste textiles. In the case of cellulose-containing waste textiles that are cellulose/polymer blends, the present invention provides effective separation and recovery of the substantially undamaged synthetic polymer (synthetic fiber) component. By "substantially undamaged" is meant that the polymer fibers are suitable for direct reuse in textiles and in other applications.

Thus, the invention provides a method for recovering cellulose from textiles, comprising adding a cellulose-containing textile to a solution comprising MSH and acid catalyst to form a reaction mixture in which cellulose fibers are fibrillated and depolymerized, terminating the decomposition to obtain fibrillated and depolymerized cellulose, and recovering a cellulose product, such as microcrystalline cellulose, from the reaction mixture.

Hereinafter cellulose "fibrillation and depolymerization" is also named cellulose "decomposition" for the purpose of simplicity.

The decomposition of the cellulose is controlled by adjusting the pH of the reaction mixture to terminate the reaction when the optimal yield of fibrillated and depolymerized cellulose is obtained, dispersed in the reaction mixture. The cellulose product is then recovered by diluting the reaction mixture with water to obtain the cellulose product in a form separable from the liquid phase of the diluted reaction mixture. For example, the cellulose product is separated from the liquid phase of the diluted reaction mixture by filtration.

When the cellulose-containing textile is a textile made of cellulose/synthetic fibers blend, the method of the invention comprises adding the cellulose-containing textile to a solution comprising an MSH and acid catalyst to form a reaction mixture in which cellulose fibers are decomposed, terminating the decomposition of the cellulose fibers by adjusting the pH of the reaction mixture to obtain fibrillated and depolymerized cellulose, with a synthetic textile component remaining insoluble, diluting the reaction mixture with water to obtain the cellulose product in a form separable from the liquid phase of the diluted reaction mixture, separating and recovering the synthetic fiber component, and recovering the cellulose product, such as microcrystalline cellulose, from the diluted reaction mixture.

The starting material for the process of the invention can be any cellulose-containing textile material, preferably a textile waste material. The cellulose-containing textile may comprise natural, plant-based fibers such as cotton, hemp, sisal, flax, jute, ramie, bagasse or may be man-made cellulosic fiber such as regenerated cellulose, viscose, rayon, cupro, lyocell, modal, or a mixture thereof. Preferably, the cellulose-containing textile material is cotton.

The starting material for the process of the invention can be any cellulose-based material comprising both cellulose and synthetic fibers. "Synthetic fibers" means that the fibers are man-made fibers produced entirely from chemical substances. The synthetic fibers in cellulose-containing textile materials that are treated by the method of the invention can for example be polyethylene terephthalate (PET), polybutylene terephthalate (PBT), polylactic acid (PLA), polyolefins, polyamides (nylon), polyurethane (Lycra) and polyacrylonitrile (Acrylic). Preferably, the synthetic fiber in the cellulose-containing textile material is polyethylene terephthalate (PET), herein it is also named "polyester".

The cellulose-containing textile comprising both cellulose and synthetic fibers can be formed from blended yarns (blending performed before spinning of the yarn) or by a combination of cellulose-based and synthetic yarns that were combined in the production of the fabric or sewn together. The method of the invention is useful for recycling of any kind of cellulose-containing textile comprising both cellulose and synthetic fibers. The method of the invention is particularly advantageous when applied to textiles that are formed from cellulose/synthetic fiber blends. Cotton/polyester blend textiles are preferred since these represent the largest group of textile waste. The textile waste may originate from various sources such as used post-consumer garments, home textiles, cloths, low-grade cotton, excess from textile factories, etc.

Non-limiting examples of cellulose-containing waste textiles include blends of cotton/polyester (cotton/PET), cotton/PBT, viscose/PET, rayon/PET, modal fibers/PET, or lyocell fibers/PET. Any cellulose-based material comprising any ratio of cellulose to polyester can be treated for recovery of cellulose fibers and polyester fibers utilizing the method of the invention. Useful examples comprise blends of cellulose, e.g., cotton, viscose, or lyocell fibers, and PET at a ratio of 80:20 (cellulose:PET), 70:30, 65:45, 60:40, 55:45, and 50:50, as well as the opposite ratios of PET:cellulose, i.e. 80:20, 70:30, 65:45, 60:40, 55:45.

Additional examples of cellulose-containing waste textiles include blends with nylon (e.g. Nylon 6,6) such as cotton/nylon, viscose/ nylon, rayon/nylon, modal/nylon, and lyocell/ nylon. Useful examples comprise blends of cellulose fiber, e.g., cotton, viscose, or lyocell, and nylon (e.g. Nylon 6,6) at a ratio of 88:12 (cellulose:nylon), or of 50:50 (cellulose:nylon).

Another example of cellulose-containing waste textiles includes blends with Lycra (polyurethane) such as cotton/ Lycra, viscose/ Lycra, rayon/ Lycra, modal/ Lycra, and lyocell/ Lycra. Useful examples comprise blends of cellulose fiber, e.g., cotton, viscose, or lyocell, and Lycra (polyurethane) at a ratio of 90:10 (cellulose:Lycra) or of 95:5 (cellulose:Lycra).

Additional examples of cellulose-containing waste textiles include acrylic blends such as cotton/ acrylic, viscose/ acrylic, rayon/ acrylic, modal/ acrylic, and lyocell/ acrylic. Useful examples comprise blends of cellulose fiber, e.g., cotton, viscose, or lyocell, and acrylic at a ratio of 55:45 (cellulose:acrylic), 50:50, 60:40 and 40:60 (cellulose:acrylic).

More specifically, the method of the invention for recovering cellulose from textile comprises the steps of:

Decomposition: treating the cellulose-containing textile with a solvent comprising MSH and acid catalyst to form a reaction mixture in which cellulose fibers are broken down (fibrillated and depolymerized);

Termination by pH adjustment: stopping the cellulose decomposition by adjusting the pH of the reaction mixture (neutralization of the acid);

Precipitation: precipitating the decomposed cellulose from the reaction mixture by diluting the reaction mixture with water;

Recovery: recovering the wet cellulose product from the diluted reaction mixture; and

Processing: processing the wet cellulose to obtain recovered dry cellulose product.

The fibrillation and depolymerization of the cellulose-containing textile by the method of the invention has shown that cellulose is degraded and decomposed from the cellulose matrix, forming micro scale fibrous particles of the crystalline parts of the cellulose. The amorphous parts, naturally occurring 10-30% of the cellulose, are dissolved in the process (Carbohydrate Polymers, Volume 135, 1 January 2016, Pages 1-9).

For reclaiming of both cellulose and synthetic polymer fibers from textiles comprising cellulose/synthetic blends, the method of the invention further comprises the steps of separating the synthetic fibers component, and optionally other non-cellulose materials that may be present in the textile, and recovery of the synthetic fibers. Such that the method of the invention can be described as comprising the steps of:

Decomposition: treating the cellulose-containing textile with a solvent comprising MSH and acid catalyst to form a reaction mixture in which cellulose fibers are broken down (fibrillated and depolymerized);

Termination by pH adjustment: stopping the cellulose decomposition by adjusting the pH of the reaction mixture (neutralization of the acid);

Separation: separating the synthetic fibers component, and optionally other non-cellulose materials that may be present in the textile (such as dyes, dirt, resins, etc.), from the reaction mixture by suitable methods to retain the cellulose dispersed in the liquid phase, such as by decantation or passing through suitable screen;

Precipitation: precipitating the decomposed cellulose from the reaction mixture by diluting the reaction mixture with water;

The order of the previous two steps (separation and precipitation), may be reversed, first precipitating the depolymerized cellulose by diluting the reaction mixture with water, and then separating the synthetic fibers component, and optionally other non-cellulose materials that may be present in the textile, from the diluted liquid phase, followed by recovery of intact synthetic fibers and cellulose, as described in the following steps.

Cellulose Recovery: recovering the wet cellulose product from the diluted reaction mixture;

Synthetic Component Recovery: recovering the synthetic fibers component;

Cellulose Processing: processing the wet cellulose to obtain recovered dry cellulose product; and optionally

Synthetic Component Processing: processing the synthetic fibers to obtain processed recovered synthetic fiber product.

The cellulose-containing waste textiles are preferably cut into pieces by means known in the art, such as, for example, mechanical cutting, shredding, crushing or grinding prior to processing of the textiles utilizing the method of the invention. Piece size may range from 1 mm to 50 mm, more preferably from 2 to 20 mm, most preferably from 5 to 15 mm.
The amounts of the textile that are suitable for loading into the decomposition reaction are typically adjusted to enable effective stirring and flowability of the reaction mixture. In general, practical concentrations of fabric load that enabled effective stirring and flowability are preferably in the range from 1 to 20% by weight, more preferably in the range from 5 to 15% by weight, based on the total reaction mass.
The cellulose decomposition reaction according to the process of the invention produces a cellulose-containing reaction mixture (dispersion). One of the unique features of the method of the invention is that the decomposition reaction is specifically adjusted for fibrillating and depolymerizing the cellulose, degrading the cellulose into a smaller degree of polymerization (DP), while substantially avoiding cellulose degradation into sugars. The cellulose hence undergoes defibrillation into finer fibrils while retaining its molecular structure and can be reused as a micro fiber in various applications. In the case of cellulose-containing waste textiles that are cellulose/polymer blends, the method of the invention is further specifically adjusted for effective separation and recovery of the substantially undamaged synthetic polymer fibers that are suitable for direct reuse in textiles and in other applications.
The dry cellulose product obtained by the method of the invention is preferably Micro Crystalline Cellulose (MCC), also known as cellulose nano fibers (CNF), cellulose nano crystals (CNC), microcellulose or nanocellulose, preferably MCC characterized by a degree of polymerization (DP) of 100-350 repeating units, more preferably by DP of 100-200 repeating units.
The invention advantageously provides a method in which parameters of the cellulose decomposition, such as the type and concentration of the MSH, the type and concentration of the acid catalyst, reaction temperature, reaction time, can be adjusted in order to obtain the desired recycled cellulose product. In the case of cellulose-containing waste textiles that are cellulose/polymer blends, the method of the invention is further specifically adjusted in order to obtain reusable synthetic polymer fibers.
The process of the invention employs MSH as a solvent for cellulose decomposition. In particular, the waste textile is treated with a solvent system that contains at least one MSH, such that the cellulose is soluble/dispersible in the solvent system to form a reaction mixture in which cellulose fibers are decomposed. The concentration of the decomposed cellulose in the reaction mixture is typically in the range of 0.5% to 15% by weight, more preferably from about 5% to 10% by weight, based on the total reaction mass. Process parameters such as waste textile loading, reaction temperature and reaction time, are described in more detail in the examples that follow. The molten salt hydrate (MSH), a key component of the decomposition reaction in the method of the invention, can be recovered and re-used.
Different types of molten salt hydrates (MSHs) can be used in the method of the invention. Especially, MSHs that comprise a cation of alkaline earth metal, for example, calcium (Ca), magnesium (Mg). Particularly preferred are MSHs of calcium (Ca).
Preferably, the MSH is an alkaline earth metal salt wherein the anion in the MSH is at least one selected from the group consisting of halogen or oxoanion. Typically preferred are MSHs having a melting point (M.P.) below room temperature. Among these, more preferred are MSHs in which the anion is halogen, and the halogen is preferably selected from Br or Cl. In general, especially useful are those MSHs in which all cations are hydrated (coordinated) with water molecules, while anions are coordination-free in the system. Especially preferred are MSHs of calcium bromide ($CaBr_2$) and calcium chloride ($CaCl_2$), such as for example $CaBr_2 \cdot 4.7H_2O$, $CaBr_2 \cdot 8.3H_2O$, $CaBr_2 \cdot 9.5H_2O$, $CaBr_2 \cdot 12H_2O$, $CaCl_2 \cdot 4H_2O$, and $CaCl_2 \cdot 6H_2O$. Combinations of MSHs, such as for example $CaCl_2/MgCl_2$, $CaBr_2/MgBr_2$, $CaCl_2/MgBr_2$ and $CaBr_2/MgCl_2$, can also be used.
MSHs, such as for example $CaBr_2$, $CaCl_2$, $MgBr_2$ and $MgCl_2$, are commercially available on the market from various manufacturers, such as ICL Group Ltd., Rubitherm GmbH, Merck KGaA, Climator Sweden AB, Cristopia Energy Systems, PCM Energy, Mitsubishi Chemical, and EPS Ltd.

Preferably, the MSHs of $CaBr_2$ are selected from hydrates having a hydrate ratio in the range of 4-11, preferably in the range of 7-9, more preferably of about 7-8.5. Among these, MSH of $CaBr_2$ having a hydrate ratio of about 8.3 is especially preferred. The melting point of the preferred MSHs of $CaBr_2$ is typically below room temperature. The amount of the $CaBr_2$ MSH in the reaction mixture is preferably adjusted in the range of 50-74% by weight based on the total weight of the solution, more preferably to about 57% by weight based on the total weight of the solution. One preferred MSH of $CaBr_2$ used as a solvent for cellulose dissolution in the method of the invention has a hydrate ratio of about 8.3 and a concentration of about 57% by weight based on the total weight of the reaction mixture.

Preferably, the MSHs of $CaCl_2$ are selected from hydrates having a hydrate ratio in the range of 4-6, preferably in the range of 5-6, more preferably of about 5 and of about 6. Among these, especially preferred are $CaCl_2$ 5 hydrate and $CaCl_2$ 6 hydrate. The melting point of the preferred MSHs of $CaCl_2$ is typically below room temperature. The concentration of the $CaCl_2$ MSH in the reaction mixture is preferably adjusted in the range of 50-60% by weight based on the total weight of the solution. Examples of preferred $CaCl_2$ MSHs used in cellulose decomposition according to the method of the invention are $CaCl_2$ with a hydrate ratio of about 5 and a concentration of about 55% by weight based on the total weight of the solution and $CaCl_2$ with a hydrate ratio of about 6 and a concentration of about 50% by weight based on the total weight of the solution.

In accordance with the method of the invention, an acid catalyst is employed in the recovery of cellulose from cellulose-containing textile. Suitable acids can be mineral or organic acids, such as for example HBr, HCl, $HNO_3$, $HClO_4$, and more. Such acids are available on the market, e.g., from ICL-IP. Among these, HBr and HCl are especially preferred, in particular HBr (48%) and HCl(32%).

The amount of the acid catalyst is preferably adjusted such that the concentration of the acid is in the range of 0.1-0.5% weight based on MSH weight quantity. For HBr (48%) and MSHs having salt concentration above 55% weight, the preferred concentration of the acid is around 0.25% weight, based on MSH weight quantity. More dilute salt hydrates (MSHs having salt concentration below 50% weight) were found to require higher acid concentrations to obtain similar results.

In general, increased acid concentrations may accelerate fabric decomposition, reduce the final DP of the MCC product and increase the occurrence of by-products (such as for example low molecular weight and oxidized sugars).

The decomposition (fibrillation and depolymerization) of cellulose from cellulose-containing textile in accordance with the method of the invention is typically carried out at a temperature in the range of about 60-120 °C to allow the decomposition (fibrillation and depolymerization) of cellulose. Preferably, the reaction mixture is heated to a temperature of about 80-120 °C during the decomposition step, more preferably to a temperature of about 100-110 °C, and most preferably to a temperature of around 105 °C. Decomposition temperature above about 120 °C may result in a higher degree of decomposition, by-products formation, and may cause yellowing of the solution, while temperatures below about 60 °C require a longer reaction time.

Time is another important parameter of the cellulose decomposition reaction. Preferably, the reaction is carried out just until all the cellulosic components of the fabric are dispersed in solution. Typical decomposition times are below about 60 minutes, preferably below 30 minutes, more preferably in the range of about 15 to 30 minutes, and even more preferably no longer than about 15 min. An increase in the reaction time may result in higher decomposition and formation of by-products.

To stop the cellulose decomposition reaction, neutralization of the acid to pH~7 is performed by methods known in the art, such as for example by addition of a neutralizing agent or a buffering agent, such as calcium hydroxide ($Ca(OH)_2$), $CaO/Ca(OH)_2$ mixtures, NaOH, $NaHCO_3$. Alternatively, the method of the invention may be carried out without the addition of a neutralizing agent or a buffering agent. Termination of the cellulose decomposition reaction and neutralization of the reaction mixture can be achieved by diluting the reaction mixture with water.

Therefore one of the advantages of the method of the invention is that the decomposition step is relatively short and does not use aggressive chemicals or conditions. It can thus be conveniently used in an industrial process and have a low carbon footprint.

As a result of the decomposition reaction, the cellulose from the cellulose-containing textile is present as a dissolved/dispersed cellulose in the reaction mixture. Preferably, the reaction mixture contains dissolved/dispersed (fibrillated and depolymerized) cellulose in an amount of around 0.5% to 15% by weight, more preferably in the range of 5% to 10% by weight, based on the total weight of the reaction mixture. Although up to 15% yield can be obtained depending on initial cellulosic fiber concentration in the reaction mass and crystallinity ratio of the cellulose, this range has a sufficient cellulose concentration for efficient and economic MCC production while being sufficiently low for avoiding high viscosities of the mixture that impair the production process.

To improve cellulose decomposition it is also possible to use solubilization enhancers, such as for example chemical, physical, and bio-catalytical agents. Examples of these are oxidizing agents such as bleaches, $H_2O_2$, and permanganates, acids such as phosphoric acid, oxalic acid, and sulfuric acid, and enzymes such as cellulase. Treatment with solubilization enhancers can be performed before the decomposition step, as a pre-treatment. However, solubilization enhancers can also be added during the decomposition reaction. Also, anti-oxidation agents can be added.

Precipitation of the decomposed cellulose from the reaction mixture may be carried out by diluting the reaction mixture with water, e.g., deionized water. Typically, the amount of water is adjusted such that the weight ratio MSH:water is not less than about 1:1 and can be from about 1:1 to 1:3 (based on the % by weight of the MSH used for the decomposition reaction). Followed by stirring of the mixture for a sufficient time (typically for about 10-60 minutes, usually for about 10-30 minutes) to allow precipitation of the decomposed cellulose from the reaction mixture.

For collecting of both cellulose and synthetic polymer fibers from textile comprising cellulose/synthetic blends, the precipitation step is preceded by separation of the synthetic fibers component, and optionally other non-cellulose materials (such as dyes, dirt, resins, etc.) that may be present in the textile. The synthetic fibers are not affected by the treatment with cellulose-dissolving agents. Therefore, the synthetic fiber component can easily be separated from the diluted reaction mixture (the cellulose-containing liquid phase). For this purpose, physical separation processes such as precipitation, floatation, vacuum or press filtration, phase separation, or centrifugation are particularly suited. The separated cellulose-containing liquid phase is subjected to the next step of recovering the cellulose product. The separated synthetic fibers component can be washed, dried and reused as is, or alternatively, further processed. Non-limiting examples of further processing of the separated synthetic fibers are described in more detail in the examples that follow.

Recovery of the cellulose, e.g., MCC, from the precipitated cellulose may be carried out using different methods known in the art. For example, the precipitated cellulose mixture is filtered and then washed several times with additional water. The resultant wet cellulose is dried, for example at room conditions or under vacuum. The obtained product is reduced to fine particles using one of the conventional technologies, for example using a blade mill, jet mill, hammer mill.

In another aspect, the invention is also directed to production of a cellulosic product, preferably microcrystalline cellulose (MCC), more preferably high-quality MCC, from cellulose-containing waste textile, such as for example cotton-based waste textile or various blended cotton/polymer waste textiles.

The method of the invention is preferably adapted to provide cellulosic fibers, especially MCC, characterized by high aspect ratio, particle size distribution <75 $\mu$m, hydrophilicity, mechanical properties, and a degree of polymerization (DP) in the range of about 100 to 350 repeating units. Preferred MCC fibers obtained by the method of the invention are characterized by DP of around 100 to 250 repeating units when tested in accordance with ASTM-D1795-13 standard ("Standard test method for intrinsic viscosity of cellulose").

In another aspect, the invention is also directed to the recovery of a synthetic fiber, more preferably substantially undamaged reusable synthetic fiber, from various blended cellulose/polymer textiles. The recovered synthetic fiber can be, for example, in a form of a non-woven fabric. The method of the invention is especially adapted for recovery of the polymer fibers in a form that is suitable for direct reuse in textiles and in other applications, e.g., in a form of a non-woven fabric, or respun into yarns using conventional methods for yarn spinning, or used in flocked fabrics.

The recovered synthetic fiber can also be further processed using different methods known in the art. For example, the recovered synthetic fiber can be compressed into solid plastic boards by means known in the art, e.g., by using a compression molding machine. The resultant solid plastic boards can be further processed into pellets by means known in the art, for example by using a shredder. The resultant dried pellets are suitable for feed to an article shaping process, fiber spinning, injection molding, extrusion molding, compression molding, optionally followed by another shaping method. Articles molded from the recovered synthetic fibers form another aspect of the invention.

Brief Description of the Figures

Figure 1: photographs of the untreated cotton/PET blend fabric (Figure 1a), the recovered PET fiber (Figure 1b), the recovered microcrystalline cellulose (MCC) (Figure 1c), x1000 magnification photograph of the untreated cotton/PET blend fabric (Figure 1d), and x1000 magnification photograph of the recovered PET fiber (Figure 1e), all from Example 15.

Figure 2: X-ray powder diffraction (XRD) analysis of the recovered microcrystalline cellulose (MCC) product from Example 14 (Figure 2a) and from Example 15 (Figure 2b).

Figure 3: photographs of the untreated cotton/Nylon 6-6 blend fabric (88%/12%) (Figure 3a), the recovered microcrystalline cellulose (MCC) (Figure 3b), and the recovered Nylon 6-6 fiber (Figure 3c), all from Example 19.

Figure 4: photographs of the untreated cotton/Lycra (polyurethane) blend fabric (90%/10%) (Figure 4a), the recovered microcrystalline cellulose (MCC) (Figure 4b), and the recovered Lycra (polyurethane) fiber (Figure 4c), all from Example 20.

Figure 5: photographs of the untreated cotton/acrylic (polyacrylate) blend fabric (55%/45%) (Figure 5a), the recovered microcrystalline cellulose (MCC) (Figure 5b), and the recovered polyacrylate fiber (Figure 5c), all from Example 21.

Figure 6: a photograph of the 100% cotton fabric after treatment, from Example 22.

**Examples**

Materials and methods

The materials used for regenerating cellulose fibers from textile are tabulated in Table 1.

Table 1

| MATERIAL | MANUFACTURER | FUNCTION |
|---|---|---|
| $CaBr_2$ 4.7 hydrate, salt concentration 70 %wt | $CaBr_2$ and $CaCl_2$ were obtained from ICL-IP as solid or solution and diluted to the desired concentration | concentrated salt (MSH) |
| $CaBr_2$ 8.3 hydrate, salt concentration 57 %wt | | concentrated salt (MSH) |
| $CaBr_2$ 9.5 hydrate, salt concentration 53.8 %wt | | concentrated salt (MSH) |
| $CaBr_2$ 12 hydrate, salt concentration 47.5 %wt | | concentrated salt (MSH) |
| $CaCl_2$ 4 hydrate, salt concentration 60.6 %wt | | concentrated salt (MSH) |
| $CaCl_2$ 6 hydrate, salt concentration 50.6 %wt | | concentrated salt (MSH) |
| $CaCl_2$ 6.1 hydrate, salt concentration 50 %wt | | concentrated salt (MSH) |
| $LiClO_4$ 5 hydrate, salt concentration 54.4 %wt | $LiClO_4$ was obtained from Merck as solid and diluted to the desired concentration | concentrated salt (MSH) |
| $CaCl_2/MgCl_2$ (1:1.13 mol) 5.6 hydrate, salt concentration 50.7 %wt | $CaCl_2/MgCl_2$ mixture was obtained from ICL-IP | concentrated salt (MSH) |
| $ZnCl_2$ 7.6/6.2 hydrate, salt concentration 50/55 %wt | | concentrated salt (MSH) |
| $ZnCl_2$ 4 hydrate, salt concentration 65 %wt | $ZnCl_2$ was obtained from Merck as solid and diluted to the desired concentration | concentrated salt (MSH) |
| $ZnCl_2$ 2.5 hydrate, salt concentration 75 %wt | | concentrated salt (MSH) |
| HBr(48%) | was obtained from ICL-IP | acid catalyst |
| HCl (32%) | was obtained from Merck | acid catalyst |
| $CaO/Ca(OH)_2$ | was obtained from Merck | neutralizing agent |
| 100 % Cotton (knit and woven) | Commercial fabric was obtained from Global Fabric Barkan Israel | fabric |
| Cotton/Polyester 50%/50% (knit and woven) | Commercial fabric was obtained from Global Fabric Barkan Israel | fabric |
| 100% Polyester (knit and woven) | Commercial fabric was obtained from Global Fabric Barkan Israel | fabric |

(continued)

| MATERIAL | MANUFACTURER | FUNCTION |
|---|---|---|
| Cotton/Nylon 6-6 88%/ 12% (knit and woven) | Commercial fabric was obtained from Global Fabric Barkan Israel | fabric |
| Cotton/Lycra 90%/10% (knit and woven) | Commercial fabric was obtained from Global Fabric Barkan Israel | fabric |
| Cotton/Polyacrylate 55%/45% knit | Commercial fabric was obtained from Global Fabric Barkan Israel | fabric |

All of the MSH salts were prepared from solid anhydrous or dehydrate salt and diluted in deionized water (DIW) to the desired concentration. For example, $CaBr_2 \cdot 12H_2O$ was prepared by dissolving 59% weight (wt.%) $CaBr_2 \cdot 2H_2O$ with 41 wt.% deionized water or by diluting commercial $CaBr_2$ 53 wt.% with 5.7 wt.% deionized water. Dilution/dissolution was also carried out using recycled dilute $CaBr_2$ solutions obtained from ICL-IP, instead of fresh water. For example, $CaCl_2 \cdot 6H_2O$ was prepared by concentrating commercial $CaCl_2$ 30 wt.% solution by removal of 40 wt.% of the water.

**Examples 1-7 (of the invention)**

**100% Cotton (knit) recycling using molten salt hydrates**

A reactor was charged with concentrated molten salt hydrate (MSH) and heated to 105 °C. An acid catalyst was added, the reaction mixture was stirred and 100% cotton fabric, preliminarily cut to small pieces, was charged into the reactor at slow stirring. The mixture was stirred for the time required to complete the decomposition of the fabric (decomposition reaction times are provided in Table 2 below). The reaction was quenched with $CaO/Ca(OH)_2$ mixture (to pH ~7). The resulting reaction mixture was poured into deionized water and stirred for a few minutes. The diluted mixture of precipitated decomposed cellulose was filtered on a Buchner funnel, washed with fresh deionized water (x3), and dried at normal room conditions to obtain flakes that were milled using a blade mill. The final MCC powder was analyzed in accordance with the ASTM-D1795-13 standard and the DP was recorded.
The reaction parameters are provided in Table 2.
The results are provided in Table 3.
The MSH load percent was calculated based on the weight percentage of salt from the total salt solution.
The acid catalyst (HBr(48%) or HCl (32%)) weight load percent (%wt) was calculated based on the weight percentage of the MSH solution.
The neutralizing agent ($CaO/Ca(OH)_2$ mixture) weight load percent (%wt) was calculated based on the load percent of the acid added in the process.
The fabric weight load percent (%wt) was calculated based on the weight of the total reaction mixture.
Fabric decomposition ability (qualitative) refers to fabric breakdown and was established by visual observation. With reference to Table 3: "Not fully decomposed" means intact fabric pieces remain in the liquid phase, by visual observation. "Good" means no intact fabric pieces remain in the liquid phase, by visual observation.
Product mixture flowability refers to the attempt to pour the liquid phase. With reference to Table 3: Product mixture flowability "No" means the reaction mixture was difficult to pour. Product mixture flowability "Yes" means the reaction mixture was easily poured.

Table 2

| Example | MSH (%wt) | MSH M.P. (°C) | Acid Catalyst (%wt) | Fabric load (%wt) | Decompositi on Reaction time | Fabric blend |
|---|---|---|---|---|---|---|
| 1 | $CaBr_2$ 4.7 hydrate (70) | >100 | HBr(48%) (0.25) | 10 | 100 minutes | 100% cotton |
| 2 | $CaBr_2$ 8.3 hydrate (57) | <R.T. | HBr(48%) (0.12) | 10 | 20 minutes | 100% cotton |
| 3 | $CaBr_2$ 9.5 hydrate (53.8) | <R.T. | HBr(48%) (0.5) | 5 | 20 minutes | 100% cotton |

(continued)

| Example | MSH (%wt) | MSH M.P. (°C) | Acid Catalyst (%wt) | Fabric load (%wt) | Decompositi on Reaction time | Fabric blend |
|---|---|---|---|---|---|---|
| 4 | $CaBr_2$ 12 hydrate (47.5) | <R.T. | HBr(48%) (0.5) | 5 | 20 minutes | 100% cotton |
| 5 | $CaCl_2$ 4 hydrate (60.6) | <R.T. | HCl (32%) (0.25) | 10 | 15 min | 100% cotton |
| 6 | CaCl2 6 hydrate (50.6) | <R.T. | HCl (32%) (0.25) | 10 | 15 min | 100% cotton |
| 7 | $CaCl_2$/ $MgCl_2$ (1:1.13 mol) 5.6 hydrate (50.7) | >100 | HBr(48%) (0.5) | 5 | 40 minutes | 100% cotton |

Table 3

| Example | Fabric decomposition ability (qualitative) | Product mixture flowability | MCC DP |
|---|---|---|---|
| 1 | Good | No | 118 |
| 2 | Good | Yes | 210 |
| 3 | Not fully decomposed | Yes | 205 |
| 4 | Not fully decomposed | No | 280 |
| 5 | Good | Yes | 209 |
| 6 | Good | Yes | 216 |
| 7 | Good | Yes | 197 |

Examples 3 and 4 show that lower salt concentration (or higher hydrate ratio) have lower decomposition activity. The acid has less influence under these conditions.

The results set out in Table 3 indicate high efficacy of a combination consisting of $CaBr_2$ 8.3 hydrate (57% wt) for treatment of 100% cotton fabric (Example 2), providing good fabric decomposition and liquid phase flowability, while achieving MCC characterized by DP of 210 units as determined according to ASTM-D1795-13 standard.

**Examples 8-9 (all comparative)**

**100% Cotton (knit) recycling using $CaCl_2$ or $LiClO_4$ molten salt hydrates without acid catalyst**

A reactor was charged with concentrated molten salt hydrate (MSH) and heated to 105 °C. The reaction mixture was stirred and 100% cotton fabric, preliminarily cut to small pieces, was charged into the reactor at slow stirring. The mixture was stirred for the time required to complete the decomposition of the fabric (decomposition reaction times are provided in Table 4 below). The resulting reaction mixture was poured into deionized water and stirred for a few minutes. The diluted mixture of precipitated decomposed cellulose was filtered on a Buchner funnel, washed with fresh deionized water (x3), and dried at normal room conditions to obtain flakes that were milled using a blade mill. The final MCC powder was analyzed in accordance with the ASTM-D1795-13 standard and the DP was recorded.

The reaction parameters are provided in Table 4.

The results are provided in Table 5.

The MSH load percent was calculated based on the weight percentage of salt from the total salt solution.

The fabric load percent was calculated based on the weight of the total reaction mixture.

Fabric decomposition ability (qualitative) refers to fabric breakdown and was established by visual observation. With reference to Table 5: "Swelled not decomposed" means intact fabric pieces remain in the liquid phase, by visual observation. "Good" means no intact fabric pieces remain in the liquid phase, by visual observation.

Product mixture flowability refers to the attempt to pour the liquid phase. With reference to Table 5: Product mixture flowability "No" means the reaction mixture was difficult to pour. Product mixture flowability "Yes" means the reaction mixture was easily poured.

Table 4

| Example | MSH (%wt) | MSH M.P. (°C) | Acid Catalyst (%wt) | Fabric load (%wt) | Decompositi on Reaction time | Fabric blend |
|---|---|---|---|---|---|---|
| 8 | CaCl$_2$ 4 hydrate (60.6) | <R.T. | None | 10 | 2 hours at 109 °C + 5.5 h at 130 °C | 100% cotton |
| 9 | LiClO$_4$ 3 hydrate (66) | <R.T. | None | 5 | 3 hours | 100% cotton |

Table 5

| Example | Fabric decomposition ability (qualitative) | Product mixture flowability | MCC DP |
|---|---|---|---|
| 8 | Good | Yes | 112 |
| 9 | Swelled not decomposed | No | 528 |

The results set out in Tables 4 and 5 indicate that when using CaCl$_2$ 4 hydrate (60.6% wt), without acid catalyst, for treatment of 100% cotton fabric (Example 8), the decomposition reaction time was prolonged to 7 hours, and higher temperature had to be applied in order to reach good fabric decomposition. In addition, the MCC product was of deep dark color.

When using LiClO$_4$ 5 hydrate (54.4% wt) without acid catalyst (Example 9) and fabric load of 5% wt, the fabric was swelled and not decomposed after three hours of treatment and the reaction mixture was difficult to pour. The resultant product (after milling) was characterized by a higher degree of polymerization, having a DP of 528 units as determined according to the ASTM-D1795-13 standard. A DP of above 500 is believed to indicate undecomposed cotton material.

**Examples 10-12 (all comparative)**

**100% Cotton (knit) recycling using preferred reaction conditions and ZnCl$_2$ molten salt hydrates**

A reactor was charged with concentrated molten salt hydrate (MSH) and heated to 105 °C. An acid catalyst (HCl (32%)) was added, the reaction mixture was stirred and 100% cotton fabric, preliminarily cut to small pieces, was charged into the reactor at slow stirring. The mixture was stirred for the time required to complete the decomposition of the fabric (decomposition reaction times are provided in Table 6 below). The reaction was quenched with CaO/Ca(OH)$_2$ mixture (to pH ~7). The resulting reaction mixture was poured into deionized water and stirred for a few minutes. The diluted mixture of precipitated decomposed cellulose was filtered on a Buchner funnel, washed with fresh deionized water (x3), and dried at normal room conditions to obtain flakes that were milled using a blade mill. The final MCC powder was analyzed in accordance with the ASTM-D1795-13 standard and the DP was recorded.

The reaction parameters are provided in Table 6.

The results are provided in Table 7.

The MSH load percent was calculated based on the weight percentage of salt from the total salt solution.

The acid catalyst (HCl (32%)) weight load percent was calculated based on the weight percentage of the MSH solution.

The neutralizing agent (CaO/Ca(OH)$_2$ mixture) load percent was calculated based on the load percent of the acid added in the process.

The fabric load percent was calculated based on the weight of the total reaction mixture.

Fabric decomposition ability (qualitative) refers to fabric breakdown and was established by visual observation.

Product mixture flowability refers to the attempt to pour the liquid phase.

Table 6

| Example | MSH (%wt) | MSH M.P. (°C) | Acid Catalyst (%wt) | Fabric load (%wt) | Decompositi on Reaction time | Fabric blend |
|---|---|---|---|---|---|---|
| 10 | $ZnCl_2$ 7.6/6.2 hydrate (50/55) | <R.T. | HCl (32%) (0.2) | 10 | 15 min | 100% cotton |
| 11 | $ZnCl_2$ 4 hydrate (65) | <R.T. | HCl (32%) (0.2) | 10 | 15 min | 100% cotton |
| 12 | $ZnCl_2$ 2.5 hydrate (75) | <R.T. | HCl (32%) (0.2) | 10 | 15 min | 100% cotton |

Table 7

| Example | Fabric decomposition ability (qualitative) | Product mixture flowability | MCC DP | MCC product appearance |
|---|---|---|---|---|
| 10 | Poor to no decomposition | No | 811/639 | Upon milling - decomposition to sieves instead of powder |
| 11 | Swelling and partial decomposition | No | 268 | Upon milling - Intermediate between sieves and powder |
| 12 | Good decomposition | No Very viscous mass | 120 | Greyish color After drying - hard material |

With reference to Table 7:
Product mixture flowability "No" means the reaction mixture was difficult to pour.

"Upon milling" refers to milling of the MCC product using a blade mill.

"Greyish color" was observed by visual observation and refers to both the reaction mixture and the MCC product. The reaction mixture was gray and the dried product was dark gray pellets. The normal color is white to off-white. When drastic conditions were applied (particularly longer heating time) darker colors appear, yellowish to brown. The longer the heating time, the darker the developed color.

"After drying - hard material", refers to the MCC product as the wet cake dried. Normal state is soft agglomerates/flakes, crumbling under hand touch.

**Examples 13-15 (of the invention)**

**Treatment of Cotton / Polyester blend fabric (50/50 wt.%) using preferred reaction conditions and $CaCl_2$ or $CaBr_2$ molten salt hydrate**

A reactor was charged with concentrated $CaBr_2$ or $CaCl_2$ and heated to 105 °C. HBr 48% (0.2-0.6 wt.% of the amount of $CaBr_2$) or HCl 32% (0.2 wt.% of the amount of $CaCl_2$) was added, the reaction mixture was stirred and 50%/50% cotton polyester blend fabric that was previously cut into medium size pieces (10-12 wt.% of a total batch) was charged into the reactor at slow stirring. The mixture was stirred for 20-30 minutes at 105 °C to complete the decomposition of the fabric. A stoichiometric quantity of $CaO/Ca(OH)_2$ mixture was added to pH ~7. The reaction mixture was poured into deionized water and stirred for a few minutes. The diluted mixture of precipitated decomposed cellulose and the intact polyester fabric was first separated on a rough sieve, after which the liquid dispersion was filtered on a Buchner funnel, washed with fresh deionized water (x3), and dried at room conditions to obtain flakes that were milled using a blade mill. The DP of the resulting MCC powder was determined according to the ASTM-D1795-13 standard. The polyester pieces were washed with deionized water and dried. The yield of polyester was quantitative.

The reaction parameters are provided in Table 8.

The results are provided in Table 9.

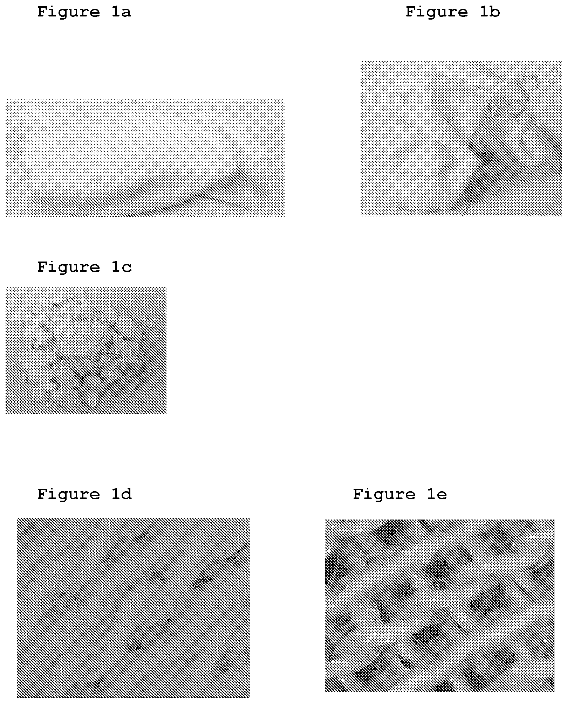

Photographs of the untreated cotton/PET blend, the recovered PET and the recovered MCC, all from Example 15, are shown in Figure 1a, 1b and 1c, respectively.

x1000 magnification photographs of the untreated cotton/PET blend fabric and the recovered PET fiber, all from Example 15, are shown in Figure 1d and 1e, respectively.

The MSH load percent was calculated based on the weight percentage of salt from the total salt solution.

The fabric load percent was calculated based on the weight of the total reaction mixture.

Table 8

| Example | MSH (%wt) | MSH M.P. (°C) | Acid Catalyst (%wt) | Fabric load (%wt) | Reaction time | Fabric blend |
|---|---|---|---|---|---|---|
| 13 | $CaCl_2$ 6.1 hydrate (50) | <R.T. | HCl (32%) (0.2) | 10 | 20 minutes | 50% cotton/50% polyester |
| 14 | $CaCl_2$ 5 hydrate (55) | <R.T. | HCl (32%) (0.2) | 10 | 20 minutes | 50% cotton/50% polyester |
| 15 | $CaBr_2$ 8.3 hydrate (57) | <RT | HBr(48%) (0.2-0.6) | 10-12 | 20-30 | 50% cotton/50% polyester |

Table 9

| Example | Fabric decomposition ability (qualitative) | MCC yield | MCC DP | Polyester yield |
|---|---|---|---|---|
| 13 | Good | 76% | 207 | Quantitative |
| 14 | Good | 76% | 174 | Quantitative |
| 15 | Good | 60% | 224 | Quantitative |

With reference to Table 9:
Quantitative means full recovery. The polyester remained intact.

**Example 16 (comparative)**

**Treatment of Cotton / Polyester blend fabric (50/50 wt.%) using preferred reaction conditions and $ZnCl_2$ molten salt hydrate**

A reactor was charged with concentrated $ZnCl_2$ (4 hydrate, 65 wt.%) and heated to 105 °C. HCl 32% (0.2 wt.% of the amount of $ZnCl_2$) was added, the reaction mixture was stirred and 50%/50% cotton polyester blend fabric that was previously cut into medium size pieces (10 wt.% of a total batch) was charged into the reactor at slow stirring. The mixture was stirred for 20 minutes at 105 °C to complete the decomposition of the cellulose in the fabric. The reaction mixture was poured into deionized water and stirred for a few minutes. The diluted mixture of precipitated decomposed cellulose and the intact polyester fabric was first separated on a rough sieve, after which time the liquid dispersion was filtered on a Buchner funnel, washed with fresh deionized water (x3), and dried at room conditions to obtain flakes that were milled using a blade mill.

Results:

The ratio of removed cotton was 17% by weight of the cotton part, i.e. of 50%, compared to 85% with $CaCl_2$; or 90-100% with $CaBr_2$ (Examples 13-15 above). The yield of MCC obtained was 9% by weight (of the cotton part, i.e. 50%), compared to 76% with $CaCl_2$; or 60% with $CaBr_2$ (Examples 13-15 above). DP of the resulting MCC powder was 170 units as determined according to the ASTM-D1795-13 standard.

In this experiment most of the cotton was not removed from the fabric and the polyester was not fully separated.

**Example 17 (of the invention)**

**Processing of Reclaimed Polyester Recovered from Treatment of Cotton / Polyester Blend Fabric (50/50 wt.%)**

Polyester fabric pieces recovered from the treatment of cotton/polyester blend fabric (50/50 wt.%) in Example 15 were converted into plastic pellets by the following procedure: The polyester fabric pieces were compressed by a compression molding machine (Lab-Tech, Model LP-S-50) at 260 °C for 3 minutes, forming a solid plate. The plate was cut into small flakes using a shredder (Yann Bang, Model YBCS-2-H).

The flakes were processed into standard bars using Arburg 320S 500-150 Injection moulding machine.

Untreated 100% polyester fabric that was obtained from Global Fabric Barkan Israel was used for comparison.

Results of mechanical properties tests are provided in Table 10.

Table 10

|  |  | 100% Polyester fabric | Treated Polyester fabric |
|---|---|---|---|
|  |  | #1 | #2 |
| Three points bending flexural test |  |  |  |
| Max. stress | MPa | 83.4 | 69.0 |
| SD |  | 8.21 | 0.35 |
| Max. strain | % | 2.92 | 2.35 |
| SD |  | 0.39 | 0.35 |
| Modulus | MPa | 2703 | 2778 |
| SD |  | 71.0 | 87.0 |
| Reverse notched Impact strength |  |  |  |
| Reverse notched Izod | J/m | 113.0 | 83.4 |
| SD |  | 28.3 | 9.6 |

According to the results, the untreated 100% polyester fabric (test sample #1) has slightly higher tensile strength and impact resistance compared to the recovered polyester fabric (test sample #2).

**Example 18**

**XRD Analysis of MCC product from Examples 14 and 15**

Phase analysis of the sample was performed by the X-ray powder diffraction (XRPD) method. The data were collected on a Panalytical Empyrean powder diffractometer ($K_\alpha$ radiation, $\lambda$ = 1.541Å) equipped with an X'Celerator linear detector and operated at v = 40 kV, I = 30 mA. Data were collected between 5-45° 2θ. Phase analysis was performed using the Match! phase identification software version 2.1.1 in conjunction with the International Center for Diffraction Data (ICDD) Powder Diffraction File (PDF-4) database (2022 release). Identified phases are listed in Table 11.

Percent crystallinity of the identified cellulose (I) phase was calculated using the equation (Das et al., 2010), as presented in (Pachua et al., 2014):

$$Crystallinity\ Index\ (\%) = \frac{I_{002} - I_{am}}{I_{002}}\ x\ 100$$

Where $I_{002}$ is the (integrated) peak intensity of (002) cellulose peak (2θ ~22°), representing the crystalline portion of the cellulose; and $I_{am}$ is the (integrated) intensity of the broad peak (hump) at 2θ ~18°, representing the amorphous portion of the cellulose.

The crystallinity index of each sample is also listed in Table 11.

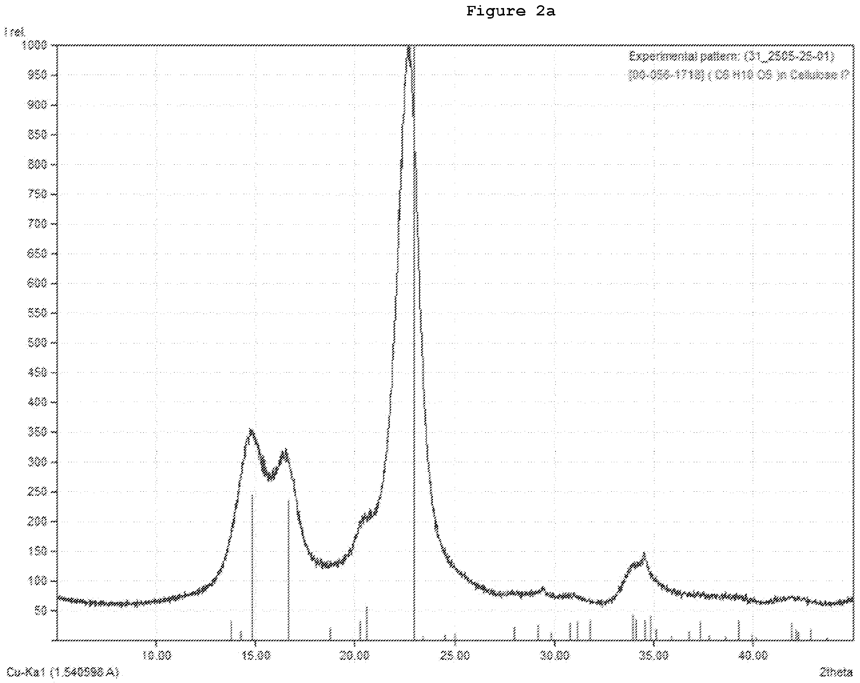

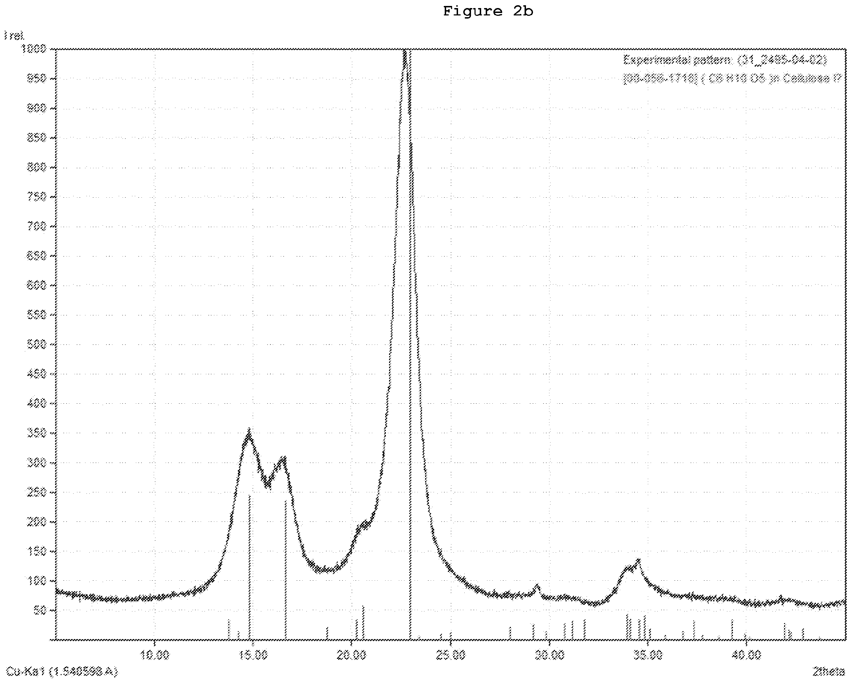

XRD phase diffraction patterns are shown in Figure 2.

Table 11

| Sample | Major Phases(s) | Minor Phase(s) | Crystallinity Index (%) |
|---|---|---|---|
| 2505-25-01 | Cellulose I ($(C_6H_{10}O_5)_n$) | None identified | 75.98 |
| 2495-04-02 | Cellulose I ($(C_6H_{10}O_5)_n$) | None identified | 76.24 |

With reference to Table 11 and Figure 2:

Sample 2505-25-01 was a sample of the MCC product obtained in Example 14 above. The XRD phase diffraction pattern is shown in Figure 2a.

Sample 2495-04-02 was a sample of the MCC product obtained in Example 15 above. The XRD phase diffraction pattern is shown in Figure 2b.

**Examples 19-21 (of the invention)**

**Treatment of Cotton / Nylon 6-6 blend fabric (88/12 wt.%), Cotton/Lycra (polyurethane) blend fabric (90/10 wt.%) and Cotton/Acrylic blend fabric (55/45 wt.%)**

A reactor was charged with concentrated $CaCl_2$*6H2O (50 weight % (wt.%)) and heated to reaction temperature (see Table 12). HCl 32% (0.13 wt.% of the amount of $CaCl_2$) was added, the reaction mixture was stirred and the cotton/synthetic fiber blend fabric (3-4 wt.% of a total batch) that was previously cut into medium size pieces was charged into the reactor at slow stirring. The mixture was stirred and heated at reaction temperature (see Table 12) to complete the decomposition of the fabric. The reaction mixture was withdrawn from the reactor and diluted with deionized water (1:3 mixture to water by weight). The synthetic fiber was separated on a 1 mm sieve, after which the liquid dispersion of precipitated decomposed cellulose (micro crystalline cellulose (MCC) fraction) was filtered on a Buchner funnel. The filtrate was used as medium for manual rubbing of the synthetic fiber to remove MCC trapped in the polymer matrix. Manual rubbing was repeated in clean water until no more cloudiness was observed.

The cellulose (MCC) fractions were combined, washed with clean deionized water (DIW), dried under vacuum at 80-100 °C and milled using a blade mill. The degree of polymerization (DP) of the resulting MCC powder was determined according to the ASTM-D1795-13 standard.

The reaction parameters are provided in Table 12.

The results are provided in Table 13.

Table 12

| Example | MSH (weight % / weight g) | Acid Catalyst (weight % / weight g) | Fabric load (weight % / weight g) | Reaction temperature (°C) | Reaction time (minutes) | Fabric blend |
|---|---|---|---|---|---|---|
| 19 | $CaCl_2$ 6 hydrate (50%/ 598 g) | HCl (32%) (0.13%/ 0.78 g) | 3%/ 18.5 g | 105 | 26 | Cotton 88%/ Nylon 6-6 12% |
| 20 | $CaCl_2$ 6 hydrate (50%/ 598 g) | HCl (32%) (0.13/ 0.78 g) | 3%/ 18.5 g | 105-106 | 30 | Cotton 90%/ Lycra 10% |
| 21 | $CaCl_2$ 6 hydrate (50%/ 598 g) | HCl (32%) (0.13/ 0.78 g) | 4%/ 20.9 g | 107 | 30 | Cotton 55%/ Polyacrylate 45% |

With reference to Table 12:
The molten salt hydrate (MSH) load percent was calculated based on the weight percentage of salt from the total salt solution.

The fabric load percent was calculated based on the weight of the total reaction mixture.

Table 13

| Example | Recovered synthetic fiber (yield %/ weight g) | Recovered cellulose (MCC) (yield %/ weight g) | MCC DP | Assessment (qualitative) |
|---|---|---|---|---|
| 19 | 88% / 1.95 g | 90% / 14.6 g | 208 | Visually good separation |
| 20 | 63% / 1.16 g | 84% / 14.0 g | 108 | Some of the fine Lycra fibers were collected together with the recovered cellulose (MCC) . |

(continued)

| Example | Recovered synthetic fiber (yield %/ weight g) | Recovered cellulose (MCC) (yield %/ weight g) | MCC DP | Assessment (qualitative) |
|---|---|---|---|---|
| 21 | 107%/ 10.1 g | 82%/ 9.4 g | 208 | Some of the decomposed cellulose remained trapped within the acrylic matrix after work-up |

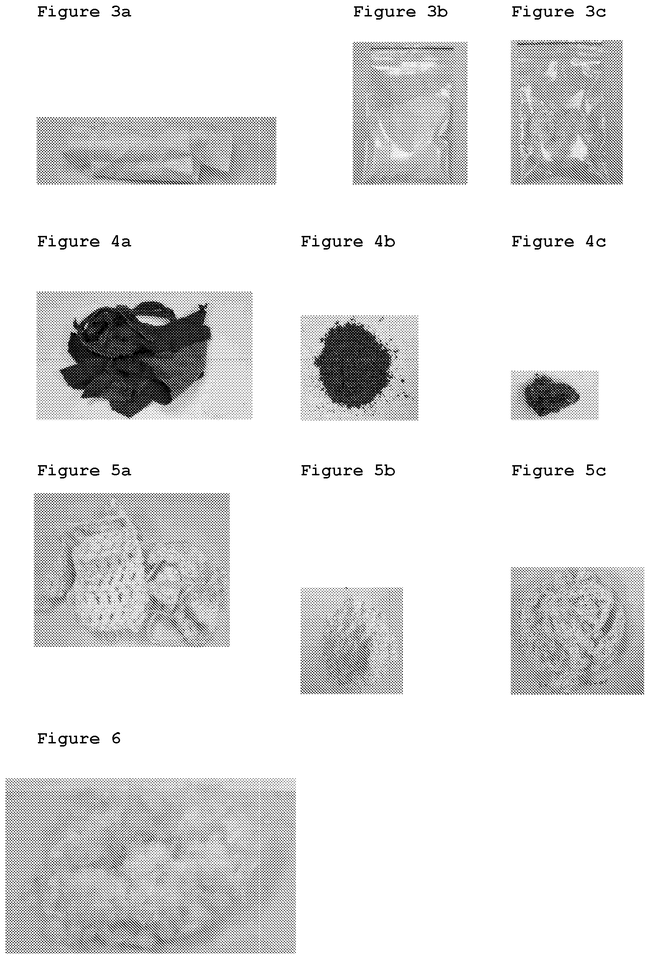

Photographs of the untreated cotton/Nylon 6-6 blend fabric (88%/12%), the recovered MCC and the recovered Nylon 6-6, all from Example 19, are shown in Figure 3a, 3b and 3c, respectively.

Photographs of the untreated cotton/Lycra (polyurethane) blend fabric (90%/10%), the recovered MCC and the recovered Lycra (polyurethane), all from Example 20, are shown in Figure 4a, 4b and 4c, respectively.

Photographs of the untreated Cotton/Acrylic (polyacrylate) blend fabric (55%/45%), the recovered MCC and the recovered polyacrylate, all from Example 21, are shown in Figure 5a, 5b and 5c, respectively.

**Examples 22-26 (all comparative)**

**Treatment of 100% Cotton fabric and of Cotton / Polyester blend fabric (50/50 wt.%), using ZnCl$_2$ molten salt hydrate**

Examples 22-26 were carried out with fabric load of 2.4 weight percent (%wt). The fabric load percent was calculated based on the weight of the total reaction mixture.

The degree of polymerization (DP) of the initial (before treatment) 100% cotton fabric (Examples 22-23) was approximately 3000.

The degree of polymerization (DP) of cotton in the Cotton/polyester (PET) blend fabric (Examples 24-26) was not measured.

The degree of polymerization (DP) DP of the recovered cellulose product was determined according to the ASTM-D1795-13 standard.

All of the experiments (Examples 22-26) were carried out using ZnCl$_2$*4H$_2$O, 65 weight % (wt.%) concentration. Zinc chloride solid anhydrous was diluted with deionized water (DIW) to the desired concentration (and analyzed for verification).

**Example 22:** A reactor was charged with concentrated ZnCl$_2$*4H$_2$O (65 weight % (wt.%), 255.8 g) and heated to first (1st) reaction temperature (see Table 14). The reaction mixture was stirred and the 100% cotton fabric (6.3 g) that was previously cut into small size pieces was added to the heated solution. The reaction mixture was stirred and heated at 1$^{st}$ reaction temperature for first (1$^{st}$) reaction time (see Table 14), after which time the temperature was raised to second (2$^{nd}$) reaction temperature and stirring continued for second (2$^{nd}$) reaction time (see Table 14) . The heating was discontinued and deionized water (DIW) (76.4 g) was added with stirring. The liquid was withdrawn through the bottom valve and the fabric, which didn't flow, was picked up from above. The cotton fabric pieces were washed on a Büchner funnel with plenty of clean DIW, dried (vacuum, 85 °C) and milled using a blade mill. The obtained product was in a form of fibers, a behavior more typical of cotton fabric before dissolution, unlike decomposed cellulose (MCC). The DP of the product was measured and recorded (see Table 15).

**Example 23:** A reactor was charged with concentrated ZnCl$_2$*4H$_2$O (65 weight % (wt.%), 255.8 g) and heated to reaction temperature (see Table 14). The reaction mixture was stirred and the 100% cotton fabric (6.3 g) that was previously cut into small size pieces was added to the heated solution. The reaction mixture was stirred and heated at reaction temperature for reaction time (see Table 14). The heating was discontinued and deionized water (DIW) (76.4 g) was added with stirring. The liquid was withdrawn through the bottom valve and the fabric, which didn't flow, was picked up from above. The cotton fabric pieces were washed on a Büchner funnel with plenty of clean DIW, dried (vacuum, 85 °C) and milled using a blade mill. The obtained product was in a form of fibers, a behavior more typical of cotton fabric before dissolution, unlike decomposed cellulose (MCC). The DP of the product was measured and recorded (see Table 15).

**Example 24:** A reactor was charged with concentrated ZnCl$_2$*4H$_2$O (65 weight % (wt.%), 255.8 g) and heated to first (1st) reaction temperature (see Table 14). The reaction mixture was stirred and the cotton/PET fabric (6.3 g) that was previously cut into small size pieces was added to the heated solution. The reaction mixture was stirred and heated at 1$^{st}$ reaction temperature for first (1$^{st}$) reaction time (see Table 14), after which time the temperature was raised to second (2$^{nd}$) reaction temperature and stirring continued for second (2$^{nd}$) reaction time (see Table 14). The heating was discontinued and deionized water (DIW) (76.4 g) was added with stirring. The liquid was withdrawn through the bottom valve and the fabric was picked up from above. The fabric pieces were subjected to manual rubbing in clean DIW to remove decomposed cellulose potentially trapped in the fabric. The water was clear. The fabric pieces were filtered and washed on a Büchner funnel with plenty of clean DIW and dried (vacuum, 85 °C). Cellulose was not separated from the PET (the obtained fabric pieces weighted 6.2 g, see Table 15).

**Example 25:** A reactor was charged with concentrated $ZnCl_2*4H_2O$ (65 weight % (wt.%), 255.8 g) and heated to reaction temperature (see Table 14). The reaction mixture was stirred and the cotton/PET fabric (6.3 g) that was previously cut into small size pieces was added to the heated solution. The reaction mixture was stirred and heated at reaction temperature for reaction time (see Table 14). The heating was discontinued and deionized water (DIW) (76.4 g) was added with stirring. The liquid was withdrawn through the bottom valve and the fabric was picked up from above. The liquid fraction was clear. The fabric pieces were subjected to manual rubbing in clean DIW to remove decomposed cellulose potentially trapped in the fabric. After combining the liquid from the reaction and water from manual rubbing the cloudy aqueous mixture was filtered on a Büchner funnel and the cellulose fraction washed and dried (vacuum, 85 °C). The weights of the isolated fabric after drying and of the isolated cellulose fraction, and the DP of the isolated cellulose fraction, were measured (see Table 15).

**Example 26:** A reactor was charged with concentrated $ZnCl_2*4H_2O$ (65 weight % (wt.%), 255.8 g) and heated to reaction temperature (see Table 14) . HCl (32%, 0.32 g) was added, the reaction mixture was stirred and the cotton/PET fabric (6.3 g) that was previously cut into small size pieces was added to the heated solution. The reaction mixture was stirred and heated at reaction temperature for reaction time (see Table 14). The heating was discontinued and deionized water (DIW) (76.4 g) was added with stirring. The liquid (slightly cloudy) was withdrawn through the bottom valve and the fabric was picked up from above. The fabric pieces were subjected to manual rubbing in clean DIW to remove decomposed cellulose potentially trapped in the fabric. After combining the liquid from the reaction and water from manual rubbing the cloudy aqueous mixture was filtered on a Büchner funnel and the cellulose fraction washed and dried (vacuum, 85 °C). The weights of the isolated fabric after drying and of the isolated cellulose fraction, and the DP of the isolated cellulose fraction, were measured (see Table 15).

The reaction parameters for Examples 22-26 are provided in Table 14.

The results for Examples 22-26 are provided in Table 15.

A photograph of the 100% Cotton fabric after treatment, from Example 22, is shown in Figure 6.

Table 14

| Example | Treated Fabric type | MSH (weight % / weight g) | HCl (32%) weight g) | Fabric load (weight % / weight g) | Reaction temperature (°C)/ Reaction time (minutes) |
|---|---|---|---|---|---|
| 22 | Cotton 100% | $ZnCl_2$ 4 hydrate (65%, 255.8 g) | absent | 2.4%/ 6.3 g | 65 °C/20 min + 70 °C/30 min |
| 23 | Cotton 100% | $ZnCl_2$ 4 hydrate (65%, 255.8 g) | absent | 2.4%/ 6.3 g | 80 °C/60 min |
| 24 | Cotton 50%/ Polyester (PET) 50% | $ZnCl_2$ 4 hydrate (65%, 255.8 g) | absent | 2.4%/ 6.3 g | 65 °C/20 min + 70 °C/30 min |
| 25 | Cotton 50%/ Polyester (PET) 50% | $ZnCl_2$ 4 hydrate (65%, 255.8 g) | absent | 2.4%/ 6.3 g | 80 °C/60 min |
| 26 | Cotton 50%/ Polyester (PET) 50% | $ZnCl_2$ 4 hydrate (65%, 255.8 g) | HCl (32%) (0.13% / 0.78 g) | 2.4%/ 6.3 g | 105 °C/20 min |

Table 15

| Example | Recovered non-cellulose part (weight g/ % yield) | Recovered cellulose part (weight g/ % yield) | DP of recovered cellulose |
|---|---|---|---|
| 22 | --- | 6.22/99 | 1227 |
| 23 | --- | 5.9/94 | 821 |

(continued)

| Example | Recovered non-cellulose part (weight g/ % yield) | Recovered cellulose part (weight g/ % yield) | DP of recovered cellulose |
|---|---|---|---|
| 24 | 6.2/197 | --- | --- |
| 25 | 6.02/191 | 0.27/8.6 | 365 |
| 26 | 5.0/159 | 0.85/27 | 131 |

With reference to Table 15, Examples 22-23: DP values of about 800 - 1200 are typical for non-decomposed cellulose.

**Claims**

1. A method for reclaiming fibers from a textile made of cellulose/synthetic fiber blend, comprising adding the textile to a solution comprising molten salt hydrate (MSH) and an acid catalyst to form a reaction mixture in which cellulose fibers are fibrillated and depolymerized, terminating the reaction to obtain fibrillated and depolymerized cellulose, recovering the cellulose from the reaction mixture, and recovering the synthetic fiber.

2. The method according to claim 1, wherein the acid is selected from hydrobromic acid (HBr) and hydrochloric acid (HCl).

3. The method according to claim 1, wherein the molten salt hydrate is selected from calcium and magnesium halide salts and mixtures thereof.

4. The method according to claim 3, wherein the molten salt hydrate is selected from calcium bromide ($CaBr_2$), calcium chloride ($CaCl_2$), magnesium bromide ($MgBr_2$), magnesium chloride ($MgCl_2$) and mixtures thereof, preferably the molten salt hydrate is selected from calcium bromide ($CaBr_2$) and calcium chloride ($CaCl_2$).

5. The method according to claim 4, wherein the molten salt hydrate is selected from $CaBr_2$ with a hydrate ratio in the range of 4-11 and $CaCl_2$ with a hydrate ratio in the range of 4-6, or wherein the molten salt hydrate is selected from $CaBr_2$ with a hydrate ratio in the range of 7-9 and calcium chloride with a hydrate ratio in the range of 5-6.

6. The method according to any one of claims 1 to 5, wherein the reaction mixture is heated to a temperature of about 60-120 °C.

7. The method according to any one of claims 1 to 6, wherein the reaction is terminated by adjusting the pH of the reaction mixture to obtain the fibrillated and depolymerized cellulose dispersed in the reaction mixture.

8. The method according to any one of claims 1 to 7, wherein the fibrillated and depolymerized cellulose is recovered by diluting the reaction mixture with water to obtain the cellulose in a form separable from a liquid phase of the diluted reaction mixture, removing the synthetic fiber and separating the cellulose product from the diluted reaction mixture.

9. The method according to any one of claims 1 to 8, wherein the cellulose in the cellulose/synthetic fiber blend is a natural plant-based fiber or a man-made cellulosic fiber selected from cotton, hemp, sisal, flax, jute, ramie, bagasse, and a mixture thereof; or regenerated cellulose, viscose, rayon, cupro, lyocell, modal and a mixture thereof, preferably the natural plant-based fiber in the cellulose/synthetic fiber blend is cotton.

10. The method according to any one of claims 1 to 9, wherein the synthetic fiber in the textile made of cellulose/synthetic fiber blend is selected from polyethylene terephthalate (polyester), polybutylene terephthalate (PBT), polylactic acid (PLA), polyolefins, polyamides, polyurethane (Lycra) and polyacrylonitrile (Acrylic), preferably the synthetic fiber in the cellulose/synthetic fiber blend is selected from polyethylene terephthalate (polyester), polyamides (nylon), polyurethane (Lycra) and polyacrylonitrile (Acrylic).

11. The method according to any one of claims 1 to 10, wherein the synthetic fiber is recovered substantially undamaged.

**12.** The method according to any one of claims 1 to 11, wherein the cellulose product is recovered in a form of a micro crystalline cellulose (MCC), preferably the micro crystalline cellulose is **characterized by** a degree of polymerization (DP) of 100-350 repeating units, preferably of 100-250 repeating units.

**13.** The method according to claim 1, comprising the steps of:

Decomposition: adding the textile to a solution comprising molten salt hydrate and an acid catalyst to form a reaction mixture in which cellulose fibers are fibrillated and depolymerized;
Termination by pH adjustment: stopping the cellulose decomposition by adjusting the pH of the reaction mixture;
Separation: separating the synthetic fibers, and optionally other non-cellulose materials that may be present in the textile, from the reaction mixture and retaining the cellulose dispersed in the liquid phase;
Precipitation: precipitating the decomposed cellulose from the reaction mixture by diluting the reaction mixture with water; and
Cellulose Recovery: separating the wet cellulose product from the diluted reaction mixture, or

wherein the order of the separation and precipitation steps is reversed, first precipitating the depolymerized cellulose by diluting the reaction mixture with water, and then separating the synthetic fiber, and optionally other non-cellulose materials that may be present in the textile, from the diluted liquid phase.

**14.** The method according to any one of claims 1 to 13, wherein the amount of the acid catalyst is adjusted in the range of about 0.1-0.5% weight based on molten salt hydrate weight quantity.

**15.** A method for reclaiming cellulose from a textile made of cellulose fiber, comprising adding the textile to a solution comprising molten salt hydrate and an acid catalyst to form a reaction mixture in which cellulose fibers are fibrillated and depolymerized, terminating the reaction to obtain fibrillated and depolymerized cellulose, recovering the cellulose from the reaction mixture.

**16.** The method according to claim 15, wherein the acid is selected from hydrobromic acid (HBr) and hydrochloric acid (HCl) .

**17.** The method according to claim 15, wherein the molten salt hydrate is selected from calcium and magnesium halide salts and mixtures thereof.

**18.** The method according to claim 17, wherein the molten salt hydrate is selected from calcium bromide ($CaBr_2$), calcium chloride ($CaCl_2$), magnesium bromide ($MgBr_2$), magnesium chloride ($MgCl_2$) and mixtures thereof, preferably the molten salt hydrate is selected from calcium bromide ($CaBr_2$) and calcium chloride ($CaCl_2$).

**19.** The method according to claim 18, wherein the molten salt hydrate is selected from $CaBr_2$ with a hydrate ratio in the range of 4-11 and $CaCl_2$ with a hydrate ratio in the range of 4-6, or wherein the molten salt hydrate is selected from $CaBr_2$ with a hydrate ratio in the range of 7-9 and calcium chloride with a hydrate ratio in the range of 5-6.

**20.** The method according to any one of claims 15 to 19, wherein the reaction mixture is heated to a temperature of about 60-120 °C.

**21.** The method according to any one of claims 15 to 20, wherein the reaction is terminated by adjusting the pH of the reaction mixture to obtain the fibrillated and depolymerized cellulose dispersed in the reaction mixture.

**22.** The method according to any one of claims 15 to 21, wherein the fibrillated and depolymerized cellulose is recovered by diluting the reaction mixture with water to obtain the cellulose in a form separable from a liquid phase of the diluted reaction mixture.

**23.** The method according to any one of claims 15 to 22, wherein the cellulose fiber is a natural plant-based fiber or a man-made fiber selected from cotton, hemp, sisal, flax, jute, ramie, bagasse, and a mixture thereof; or regenerated cellulose, viscose, rayon, cupro, lyocell, modal and a mixture thereof, preferably the natural plant-based fiber is cotton.

**24.** The method according to any one of claims 15 to 23, wherein the cellulose product is recovered in a form of a micro crystalline cellulose (MCC), preferably the micro crystalline cellulose is **characterized by** a degree of polymerization (DP) of 100-350 repeating units, more preferably of 100-250 repeating units.

**25.** The method according to claim 15, comprising the steps of:

Decomposition: adding the textile to a solution comprising molten salt hydrate and an acid catalyst to form a reaction mixture in which cellulose fibers are fibrillated and depolymerized;
Termination by pH adjustment: stopping the cellulose decomposition by adjusting the pH of the reaction mixture;
Precipitation: precipitating the decomposed cellulose from the reaction mixture by diluting the reaction mixture with water;
Cellulose Recovery: recovering the wet cellulose product from the diluted reaction mixture; and
Processing: processing the wet cellulose to obtain recovered dry cellulose product.

**26.** The method according to any one of claims 15 to 25, wherein the amount of the acid catalyst is adjusted in the range of about 0.1-0.5% weight based on molten salt hydrate weight quantity.

**Patentansprüche**

**1.** Verfahren zur Rückgewinnung von Fasern aus einem Textil, das aus einem Cellulose/Kunstfasergemisch hergestellt ist, umfassend die Zugabe des Textils zu einer Lösung, die geschmolzenes Salzhydrat (MSH) und einen Säurekatalysator umfasst, um ein Reaktionsgemisch zu bilden, in dem Cellulosefasern fibrilliert und depolymerisiert werden, das Beenden der Reaktion, um fibrillierte und depolymerisierte Cellulose zu erhalten, die Rückgewinnung der Cellulose aus der Reaktionsmischung und die Rückgewinnung der synthetischen Faser.

**2.** Verfahren nach Anspruch 1, wobei die Säure aus Bromwasserstoffsäure (HBr) und Salzsäure (HCl) ausgewählt ist.

**3.** Verfahren nach Anspruch 1, wobei das geschmolzene Salzhydrat aus Kalzium- und Magnesiumhalogenidsalzen und Mischungen davon ausgewählt ist.

**4.** Verfahren nach Anspruch 3, wobei das geschmolzene Salzhydrat aus Calciumbromid ($CaBr_2$), Calciumchlorid ($CaCl_2$), Magnesiumbromid ($MgBr_2$), Magnesiumchlorid ($MgCl_2$) und Mischungen davon ausgewählt ist, wobei das geschmolzene Salzhydrat vorzugsweise aus Calciumbromid ($CaBr_2$) und Calciumchlorid ($CaCl_2$) ausgewählt ist.

**5.** Verfahren nach Anspruch 4, wobei das geschmolzene Salzhydrat aus $CaBr_2$ mit einem Hydratverhältnis im Bereich von 4-11 und $CaCl_2$ mit einem Hydratverhältnis im Bereich von 4-6 ausgewählt ist oder wobei das geschmolzene Salzhydrat aus $CaBr_2$ mit einem Hydratverhältnis im Bereich von 7-9 und Calciumchlorid mit einem Hydratverhältnis im Bereich von 5-6 ausgewählt ist.

**6.** Verfahren nach einem der Ansprüche 1 bis 5, wobei das Reaktionsgemisch auf eine Temperatur von etwa 60-120°C erhitzt wird,

**7.** Verfahren nach einem der Ansprüche 1 bis 6, wobei die Reaktion durch Einstellen des pH-Wertes des Reaktionsgemisches beendet wird, um die in dem Reaktionsgemisch fibrillierte und depolymerisierte Cellulose zu erhalten,

**8.** Verfahren nach einem der Ansprüche 1 bis 7, wobei die fibrillierte und depolymerisierte Cellulose durch Verdünnen des Reaktionsgemisches mit Wasser, um die Cellulose in einer Form, die von einer flüssigen Phase des verdünnten Reaktionsgemisches abtrennbar ist, zu erhalten, Entfernen der synthetischen Faser und Abtrennen des Celluloseproduktes aus dem verdünnten Reaktionsgemisch zurückgewonnen wird.

**9.** Verfahren nach einem der Ansprüche 1 bis 8, wobei die Cellulose in dem Cellulose/Kunstfasergemisch eine natürliche Faser auf Pflanzenbasis oder eine künstliche Cellulosefaser, ausgewählt aus Baumwolle, Hanf, Sisal, Flachs, Jute, Ramie, Bagasse und einer Mischung davon, oder regenerierte Cellulose, Viskose, Rayon, Cupro, Lyocell, Modal und eine Mischung davon ist, wobei die natürliche Faser auf Pflanzenbasis in dem Cellulose/Kunstfasergemisch vorzugsweise Baumwolle ist.

**10.** Verfahren nach einem der Ansprüche 1 bis 9, wobei die Kunstfaser in dem Textil, das aus einem Cellulose/Kunstfasergemisch hergestellt ist, aus Polyethylenterephthalat (Polyester), Polybutylenterephthalat (PBT), Polymilchsäure (PLA), Polyolefinen, Polyamiden, Polyurethan (Lycra) und Polyacrylnitril (Acryl) ausgewählt ist, wobei die Kunstfaser in dem Cellulose/Kunstfasergemisch vorzugsweise aus Polyethylenterephthalat (Polyester), Polyamiden (Nylon), Polyurethan (Lycra) und Polyacrylnitril (Acryl) ausgewählt ist.

11. Verfahren nach einem der Ansprüche 1 bis 10, wobei die Kunstfaser im Wesentlichen unbeschädigt zurückgewonnen wird.

12. Verfahren nach einem der Ansprüche 1 bis 11, wobei das Celluloseprodukt in Form einer mikrokristallinen Cellulose (MCC) zurückgewonnen wird, wobei die mikrokristalline Cellulose vorzugsweise durch einen Polymerisationsgrad (DP) von 100-350 Wiederholungseinheiten, vorzugsweise von 100-250 Wiederholungseinheiten, gekennzeichnet ist.

13. Verfahren nach Anspruch 1, umfassend die Schritte:

Zersetzung: Zugabe des Textils zu einer Lösung, die geschmolzenes Salzhydrat und einen Säurekatalysator enthält, um ein Reaktionsgemisch zu bilden, in dem Cellulosefasern fibrilliert und depolymerisiert werden;
Beendigung durch pH-Einstellung: Stoppen der Cellulosezersetzung durch Einstellen des pH-Wertes der Reaktionsmischung;
Abtrennung: Abtrennung der Kunstfasern und gegebenenfalls anderer nichtcellulosehaltiger Materialien, die in dem Textil vorhanden sein können, aus dem Reaktionsgemisch und Zurückbehalten der in der flüssigen Phase dispergierten Cellulose;
Ausfällung: Ausfällung der zersetzten Cellulose aus dem Reaktionsgemisch durch Verdünnen des Reaktionsgemisches mit Wasser; und
Celluloserückgewinnung: Abtrennung des nassen Celluloseproduktes aus dem verdünnten Reaktionsgemisch, oder
wobei die Reihenfolge der Abtrennungs- und Ausfällungsschritte umgekehrt ist, wobei zuerst die depolymerisierte Cellulose durch Verdünnen des Reaktionsgemisches mit Wasser ausgefällt wird und dann die Kunstfaser und gegebenenfalls andere nichtcellulosehaltige Materialien, die in dem Textil vorhanden sein können, aus der verdünnten flüssigen Phase abgetrennt werden.

14. Verfahren nach einem der Ansprüche 1 bis 13, wobei die Menge des Säurekatalysators im Bereich von etwa 0,1-0,5 Gew.-%, bezogen auf die Gewichtsmenge des geschmolzenen Salzhydrats, eingestellt wird.

15. Verfahren zur Rückgewinnung von Cellulose aus einem aus Cellulosefasern hergestellten Textil, umfassend die Zugabe des Textils zu einer Lösung, die geschmolzenes Salzhydrat und einen Säurekatalysator umfasst, um ein Reaktionsgemisch zu bilden, in dem Cellulosefasern fibrilliert und depolymerisiert werden, das Beenden der Reaktion, um fibrillierte und depolymerisierte Cellulose zu erhalten, die Rückgewinnung der Cellulose aus dem Reaktionsgemisch.

16. Verfahren nach Anspruch 15, wobei die Säure aus Bromwasserstoffsäure (HBr) und Salzsäure (HCl) ausgewählt ist.

17. Verfahren nach Anspruch 15, wobei das geschmolzene Salzhydrat aus Kalzium- und Magnesiumhalogenidsalzen und Mischungen davon ausgewählt ist.

18. Verfahren nach Anspruch 17, wobei das geschmolzene Salzhydrat aus Calciumbromid ($CaBr_2$), Calciumchlorid ($CaCl_2$), Magnesiumbromid ($MgBr_2$), Magnesiumchlorid ($MgCl_2$) und Mischungen davon ausgewählt ist, wobei das geschmolzene Salzhydrat vorzugsweise aus Calciumbromid ($CaBr_2$) und Calciumchlorid ($CaCl_2$) ausgewählt ist.

19. Verfahren nach Anspruch 18, wobei das geschmolzene Salzhydrat aus $CaBr_2$ mit einem Hydratverhältnis im Bereich von 4-11 und $CaCl_2$ mit einem Hydratverhältnis im Bereich von 4-6 ausgewählt ist oder wobei das geschmolzene Salzhydrat aus $CaBr_2$ mit einem Hydratverhältnis im Bereich von 7-9 und Calciumchlorid mit einem Hydratverhältnis im Bereich von 5-6 ausgewählt ist.

20. Verfahren nach einem der Ansprüche 15 bis 19, wobei das Reaktionsgemisch auf eine Temperatur von etwa 60-120°C erhitzt wird.

21. Verfahren nach einem der Ansprüche 15 bis 20, wobei die Reaktion durch Einstellen des pH-Wertes des Reaktionsgemisches beendet wird, um die in dem Reaktionsgemisch fibrillierte und depolymerisierte Cellulose zu erhalten.

22. Verfahren nach einem der Ansprüche 15 bis 21, wobei die fibrillierte und depolymerisierte Cellulose durch Verdünnen des Reaktionsgemisches mit Wasser, um die Cellulose in einer Form, die von einer flüssigen Phase des verdünnten Reaktionsgemisches abtrennbar ist, zu erhalten, zurückgewonnen wird.

**23.** Verfahren nach einem der Ansprüche 15 bis 22, wobei die Cellulosefaser eine natürliche Faser auf Pflanzenbasis oder eine künstliche Faser, ausgewählt aus Baumwolle, Hanf, Sisal, Flachs, Jute, Ramie, Bagasse und einer Mischung davon, oder regenerierte Cellulose, Viskose, Rayon, Cupro, Lyocell, Modal und einer Mischung davon ist, wobei die natürliche Faser auf Pflanzenbasis vorzugsweise Baumwolle ist.

**24.** Verfahren nach einem der Ansprüche 15 bis 23, wobei das Celluloseprodukt in Form einer mikrokristallinen Cellulose (MCC) zurückgewonnen wird, wobei die mikrokristalline Cellulose vorzugsweise durch einen Polymerisationsgrad (DP) von 100-350 Wiederholungseinheiten, vorzugsweise von 100-250 Wiederholungseinheiten, gekennzeichnet ist.

**25.** Verfahren nach Anspruch 15, umfassend die folgenden Schritte:

Zersetzung: Zugabe des Textils zu einer Lösung, die geschmolzenes Salzhydrat und einen Säurekatalysator enthält, um ein Reaktionsgemisch zu bilden, in dem Cellulosefasern fibrilliert und depolymerisiert werden;
Beendigung durch pH-Einstellung: Stoppen der Cellulosezersetzung durch Einstellen des pH-Wertes der Reaktionsmischung;
Ausfällung: Ausfällung der zersetzten Cellulose aus dem Reaktionsgemisch durch Verdünnen des Reaktionsgemisches mit Wasser;
Celluloserückgewinnung: Rückgewinnung des feuchten Celluloseproduktes aus dem verdünnten Reaktionsgemisch; und
Verarbeitung: Verarbeitung der nassen Cellulose, um das zurückgewonnene trockene Celluloseprodukt zu erhalten.

**26.** Verfahren nach einem der Ansprüche 15 bis 25, wobei die Menge des Säurekatalysators im Bereich von etwa 0,1-0,5 Gew.-%, bezogen auf die Gewichtsmenge des geschmolzenen Salzhydrats, eingestellt wird.

**Revendications**

**1.** Procédé pour récupérer des fibres provenant d'un textile constitué d'un mélange de fibres de cellulose et de fibre synthétique comportant d'ajouter le textile à une solution comportant un hydrate de sel fondu (MSH) et un catalyseur acide pour former un mélange réactionnel dans lequel des fibres de cellulose sont fibrillées et dépolymérisées, de mettre fin à la réaction pour obtenir de la cellulose fibrillée et dépolymérisée, récupérer la cellulose du mélange réactionnel, et récupérer la fibre synthétique.

**2.** Procédé selon la revendication 1, dans lequel l'acide est choisi parmi l'acide bromhydrique (HBr) et l'acide chlorhydrique (HCl).

**3.** Procédé selon la revendication 1, dans lequel l'hydrate de sel fondu est choisi parmi des sels d'halogénure de calcium et de magnésium et des mélanges de ceux-ci.

**4.** Procédé selon la revendication 3, dans lequel l'hydrate de sel fondu est choisi parmi le bromure de calcium ($CaBr_2$), le chlorure de calcium ($CaCl_2$), le bromure de magnésium ($MgBr_2$), le chlorure de magnésium ($MgCl_2$) et des mélanges de ceux-ci, l'hydrate de sel fondu étant de préférence choisi parmi le bromure de calcium ($CaBr_2$) et le chlorure de calcium ($CaCl_2$).

**5.** Procédé selon la revendication 4, dans lequel l'hydrate de sel fondu est choisi parmi $CaBr_2$ avec un taux d'hydrates dans la plage de 4 à 11 et $CaCl_2$ avec un taux d'hydrates dans la plage de 4 à 6, ou dans lequel l'hydrate de sel fondu est choisi parmi $CaBr_2$ avec un taux d'hydrates dans la plage de 7 à 9 et du chlorure de calcium avec un taux d'hydrates dans la plage de 5 à 6.

**6.** Procédé selon l'une quelconque des revendications 1 à 5, dans lequel le mélange réactionnel est chauffé jusqu'à une température d'environ 60 à 120 °C.

**7.** Procédé selon l'une quelconque des revendications 1 à 6, dans lequel la réaction prend fin en ajustant le pH du mélange réactionnel pour obtenir la cellulose fibrillée et dépolymérisée dispersée dans le mélange réactionnel.

**8.** Procédé selon l'une quelconque des revendications 1 à 7, dans lequel la cellulose fibrillée et dépolymérisée est récupérée en diluant le mélange réactionnel avec de l'eau pour obtenir la cellulose sous une forme séparable d'une phase liquide du mélange réactionnel dilué, en récupérant la fibre synthétique et en séparant le produit cellulosique du mélange réactionnel dilué.

9. Procédé selon l'une quelconque des revendications 1 à 8, dans lequel la cellulose dans le mélange de fibres de cellulose et de fibre synthétique est une fibre à base de plante naturelle ou une fibre cellulosique manufacturée choisie parmi le coton, le chanvre, le sisal, le lin, le jute, la ramie, la bagasse et un mélange de ceux-ci ; ou de la cellulose régénérée, la viscose, la rayonne, le cupro, la lyocell, le modal et un mélange de ceux-ci, la fibre à base de plante naturelle dans le mélange de fibres de cellulose et de fibre synthétique étant de préférence le coton.

10. Procédé selon l'une quelconque des revendications 1 à 9, dans lequel la fibre synthétique dans le textile constitué d'un mélange de fibres de cellulose et de fibre synthétique est choisie parmi le polyéthylène térephtalate (polyester), le polybutylène térephtalate (PBT), l'acide polylactique (PLA), des polyoléfines, des polyamides, un polyuréthane (Lycra) et un polyacrylonitrile (Acrylique), la fibre synthétique dans le mélange de fibres de cellulose et de fibre synthétique étant de préférence choisie parmi le polyéthylène térephtalate (polyester), des polyamides (nylon), un polyuréthane (Lycra) et un polyacrylonitrile (Acrylique).

11. Procédé selon l'une quelconque des revendications 1 à 10, dans lequel la fibre synthétique est récupérée pratiquement non endommagée.

12. Procédé selon l'une quelconque des revendications 1 à 11, dans lequel le produit cellulosique est récupéré sous forme d'une cellulose micro cristalline (MCC), la cellulose micro cristalline étant de préférence **caractérisée par** un degré de polymérisation (DP) de 100 à 350 motifs répétés, de préférence de 100 à 250 motifs répétés.

13. Procédé selon la revendication 1, comportant les étapes de :

decomposition : ajouter le textile à une solution comportant un hydrate de sel fondu et un catalyseur acide pour former un mélange réactionnel dans lequel des fibres de cellulose sont fibrillées et dépolymérisées ;
arrêt par ajustement de pH : arrêter la décomposition de la cellulose en ajustant le pH du mélange réactionnel ;
séparation : séparer les fibres synthétiques et facultativement d'autres matériaux non cellulosiques qui peuvent être présents dans le textile, du mélange réactionnel et maintenir la cellulose dispersée dans la phase liquide ;
précipitation : précipiter la cellulose décomposée provenant du mélange réactionnel en diluant le mélange réactionnel avec de l'eau ; et
récupération de la cellulose : séparer le produit cellulosique humide du mélange réactionnel dilué, ou
dans lequel l'ordre des étapes de séparation et de précipitation est inversé, en précipitant d'abord la cellulose dépolymérisée, en diluant le mélange réactionnel avec de l'eau et en séparant ensuite la fibre synthétique, et facultativement d'autres matériaux non cellulosiques qui peuvent être présents dans le textile, de la phase liquide diluée.

14. Procédé selon l'une quelconque des revendications 1 à 13, dans lequel la quantité du catalyseur acide est ajustée dans la plage d'environ 0,1 à 0,5 % en poids sur la base de la quantité en poids d'hydrate de sel fondu.

15. Procédé pour récupérer de la cellulose à partir d'un textile constitué de fibre de cellulose, comportant d'ajouter le textile à une solution comportant un hydrate de sel fondu et un catalyseur acide pour former un mélange réactionnel dans lequel des fibres de cellulose sont fibrillées et dépolymérisées, mettre fin à la réaction pour obtenir de la cellulose fibrillée et dépolymérisée, récupérer la cellulose du mélange réactionnel.

16. Procédé selon la revendication 15, dans lequel l'acide est choisi parmi l'acide bromhydrique (HBr) et l'acide chlorhydrique (HCl).

17. Procédé selon la revendication 15, dans lequel l'hydrate de sel fondu est choisi parmi des sels d'halogénure de calcium et de magnésium et des mélanges de ceux-ci.

18. Procédé selon la revendication 17, dans lequel l'hydrate de sel fondu est choisi parmi le bromure de calcium ($CaBr_2$), le chlorure de calcium ($CaCl_2$), le bromure de magnésium ($MgBr_2$), le chlorure de magnésium ($MgCl_2$) et des mélanges de ceux-ci, l'hydrate de sel fondu étant de préférence choisi parmi le bromure de calcium ($CaBr_2$) et le chlorure de calcium ($CaCl_2$).

**19.** Procédé selon la revendication 18, dans lequel l'hydrate de sel fondu est choisi parmi $CaBr_2$ avec un taux d'hydrates dans la plage de 4 à 11 et $CaCl_2$ avec un taux d'hydrates dans la plage de 4 à 6, ou dans lequel l'hydrate de sel fondu est choisi parmi $CaBr_2$ avec un taux d'hydrates dans la plage de 7 à 9 et du chlorure de calcium avec un taux d'hydrates dans la plage de 5 à 6.

**20.** Procédé selon l'une quelconque des revendications 15 à 19, dans lequel le mélange réactionnel est chauffé jusqu'à une température d'environ 60 à 120 °C.

**21.** Procédé selon l'une quelconque des revendications 15 à 20, dans lequel la réaction prend fin en ajustant le pH du mélange réactionnel pour obtenir la cellulose fibrillée et dépolymérisée dispersée dans le mélange réactionnel.

**22.** Procédé selon l'une quelconque des revendications 15 à 21, dans lequel la cellulose fibrillée et dépolymérisée est récupérée en diluant le mélange réactionnel avec de l'eau pour obtenir la cellulose sous une forme séparable d'une phase liquide du mélange réactionnel dilué.

**23.** Procédé selon l'une quelconque des revendications 15 à 22, dans lequel la fibre de cellulose est une fibre à base de plante naturelle ou une fibre manufacturée choisie parmi le coton, le chanvre, le sisal, le lin, le jute, la ramie, la bagasse et un mélange de ceux-ci ; ou de la cellulose régénérée, la viscose, la rayonne, le cupro, la lyocell, le modal et un mélange de ceux-ci, la fibre à base de plante naturelle étant de préférence le coton.

**24.** Procédé selon l'une quelconque des revendications 15 à 23, dans lequel le produit cellulosique est récupéré sous forme d'une cellulose micro cristalline (MCC), la cellulose micro cristalline étant de préférence **caractérisée par** un degré de polymérisation (DP) de 100 à 350 motifs répétés, de préférence de 100 à 250 motifs répétés.

**25.** Procédé selon la revendication 15, comportant les étapes de :

décomposition : ajouter le textile à une solution comportant un hydrate de sel fondu et un catalyseur acide pour former un mélange réactionnel dans lequel des fibres de cellulose sont fibrillées et dépolymérisées ;
arrêt par ajustement de pH : arrêter la décomposition de la cellulose en ajustant le pH du mélange réactionnel ;
précipitation : précipiter la cellulose décomposée provenant du mélange réactionnel en diluant le mélange réactionnel avec de l'eau ;
récupération de la cellulose : récupérer le produit cellulosique humide du mélange réactionnel dilué ; et
traitement : traiter la cellulose humide pour obtenir un produit cellulosique sec récupéré.

**26.** Procédé selon l'une quelconque des revendications 15 à 25, dans lequel la quantité du catalyseur acide est ajustée dans la plage d'environ 0,1 à 0,5 % en poids sur la base de la quantité en poids d'hydrate de sel fondu.

Figure 1a

Figure 1b

Figure 1c

Figure 1d

Figure 1e

Figure 2a

EP 4 277 945 B1

Figure 2b

Figure 3a

Figure 3b

Figure 3c

Figure 4a

Figure 4b

Figure 4c

Figure 5a

Figure 5b

Figure 5c

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9187790 B2
- WO 2020212616 A
- CN 102093484
- US 11168196 B2
- JP 5824766 B
- CN 106146877
- CN 113550019

### Non-patent literature cited in the description

- **XUEQIN ZHANG ; NAIYU XIAO ; HUIHUI WANG ; CHUANFU LIU ; XUEJUN PAN.** *Polymers,* 2018, vol. 10, 614
- *Carbohydrate Polymers,* 01 January 2016, vol. 135, 1-9